(19) Europäisches Patentamt / European Patent Office / Office européen des brevets

(11) **EP 2 013 705 B1**

(12) **FASCICULE DE BREVET EUROPEEN**

(45) Date de publication et mention
de la délivrance du brevet:
**11.11.2015 Bulletin 2015/46**

(21) Numéro de dépôt: **07731319.5**

(22) Date de dépôt: **19.04.2007**

(51) Int Cl.:
***G06F 7/506*** *(2006.01)*     *G06F 7/508* *(2006.01)*

(86) Numéro de dépôt international:
**PCT/FR2007/000655**

(87) Numéro de publication internationale:
**WO 2007/122319 (01.11.2007 Gazette 2007/44)**

(54) **ADDITIONNEUR N BITS ET PROCÉDÉ D'ADDITION CORRESPONDANT**

N-BIT-ADDIERER UND DAZUGEHÖRIGES ADDITIONSVERFAHREN

N-BIT ADDER AND CORRESPONDING ADDITION METHOD

(84) Etats contractants désignés:
**DE GB**

(30) Priorité: **21.04.2006 FR 0603549**

(43) Date de publication de la demande:
**14.01.2009 Bulletin 2009/03**

(73) Titulaire: **S.A.R.L. Daniel Torno**
**45100 Orléans (FR)**

(72) Inventeur: **TORNO, Daniel**
**45100 Orléans (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 0 981 080**     **US-A- 3 566 098**
**US-A1- 2004 128 339**

• **ABRAHAM J A ET AL: "DESIGN OF TESTABLE STRUCTURES DEFINED BY SIMPLE LOOPS" IEEE TRANSACTIONS ON COMPUTERS, IEEE SERVICE CENTER, LOS ALAMITOS, CA, US, vol. C-30, no. 11, novembre 1981 (1981-11), pages 875-884, XP000748205 ISSN: 0018-9340**

**Description**

L'invention concerne les additionneurs numériques, en particulier les additionneurs formés à partir de demi-additionneurs montés en cascade.

Classiquement, pour effectuer une addition entre deux bits d'entrée, et une retenue entrante, on utilise deux demi-additionneurs montés en cascade. Le premier additionneur effectue la somme des deux bits et délivre en sortie le résultat de la somme et une première retenue intermédiaire. Le deuxième demi-additionneur reçoit en entrée la retenue entrante et le résultat de la somme obtenue précédemment et délivre en sortie, d'une part la somme de la retenue entrante et des deux bits d'entrée et d'autre part, la retenue finale.

Pour effectuer la somme de deux nombres binaires de N bits chacun, on peut utiliser ce couple de demi-additionneurs plusieurs fois connectés en cascade, comme décrit par exemple dans l'ouvrage « Circuits logiques de traitement numérique de l'information » de J. Chinal aux éditions Cepadues Editions 1979, ISBN 2.85428.040.7, pages 105 à 112.

Dans ce cas, chaque bit de rang n de la somme des deux nombres d'entrée est estimé et corrigé n fois par les retenues successives générées à chaque étage de demi-additionneurs.

Cependant, ce type d'additionneur ne permet d'effectuer des corrections qu'avec des retenues positives.

En outre, l'estimation initiale des bits de la somme et des retenues dans les additionneurs standards, est incompatible avec les contraintes de la logique réversible, c'est-à-dire la possibilité à partir d'un signal de sortie de retrouver le signal d'entrée.

Par ailleurs, ce type d'additionneur standard nécessite de propager chaque retenue générée à chaque étage de traitement, ce qui peut être inutile pour certaines applications, par exemple dans le cas de l'utilisation de demi-additionneurs pour effectuer des divisions.

Le document US 3 566 098 porte sur un circuit classique d'additionneur de nombres binaires. Dans ce circuit, les bits de la somme de signaux d'entrée sont estimés puis corrigés après chaque estimation par les retenues successives générées à chaque étage du circuit.

L'invention vise à apporter une solution à ces problèmes.

A cet effet, selon un premier aspect de l'invention, il est proposé un procédé d'addition de signaux d'entrée selon la revendication 1.

En d'autres termes, on effectue successivement plusieurs estimations (j) de chaque bit de la somme des signaux d'entrée.

Après chaque estimation, on apporte une correction au bit de la somme estimé, puis une nouvelle estimation est effectuée à partir de la précédente estimation corrigée de ce même bit.

En d'autres termes on corrige lesdites estimations ($U^j$) à l'aide d'un signal de correction ($R^j$) après chaque estimation, chaque bit de correction de rang (n) ($R_n^j$), étant élaboré à l'aide de la dernière estimation du bit de rang $(n\underline{-1})(U_{n-1}^{j-1})$, du dernier bit de correction de rang $(n\underline{-1})$ ($R_{n-1}^{j-1}$), et de la dernière estimation du bit de rang (n-2)($U_{n-2}^{j-1}$).

Ce procédé a pour avantage de pouvoir effectuer des corrections soit négatives, soit positives à chaque estimation des bits de la somme. Les processus utilisant des additions/soustractions de manière itératives en sont améliorés.

Les signaux d'entrée peuvent comprendre en outre une retenue d'entrée.

De préférence, le procédé comprend outre une étape d'initialisation où on initialise la valeur des bits estimés de ladite somme et la valeur des signaux de correction, et j étapes successives de traitement, j étant un entier inférieur ou égal à N, où au cours de la k$^{ième}$ étape, k variant de 1 à j, on estime les bits de la somme dont le rang n est compris entre k et N, et on élabore pour chaque bit de rang n, le n$^{ième}$ signal de correction, chaque bit estimé de la somme de rang n, étant estimé à partir du bit estimé de la somme de rang n et du n$^{ième}$ signal de correction, respectivement estimé et élaboré au cours de l'étape précédente, le n$^{ième}$ signal de correction, étant élaboré à partir des bits estimés de la somme de rang n-1 et de rang n-2, et du (n-1)$^{ième}$ du signal de correction, respectivement estimés et élaboré au cours de l'étape précédente.

On peut en outre élaborer une retenue de sortie à partir de l'ensemble des N$^{ièmes}$ signaux de correction.

Selon un mode de mise en oeuvre, l'initialisation de chaque bit estimé de ladite somme est fonction des bits de même rang des premier et deuxième nombres d'entrée, et l'initialisation de la valeur du signal de correction de chaque bit estimé est fonction des bits de rang précédent des premier et deuxième nombres d'entrée.

Dans ce cas, il vient :

$$\begin{cases} U_n^0 = a_n \oplus b_n \\ R_n^0 = a_{n-1} \cdot b_{n-1} \end{cases}$$

où :

$U_n^0$ est la valeur initiale du bit estimé de la somme des signaux d'entrée, de rang n, n variant de 0 à N-1,

$R_n^0$ est la valeur initiale du signal de correction du bit estimé de la somme des signaux d'entrée, de rang n, n variant de 1 à N,

$a_n$ et $b_n$ étant les bits de rang n, respectivement des premier et deuxième nombres d'entrée.

Selon un autre mode de mise en oeuvre, l'initialisation de chaque bit estimé de ladite somme est fonction du complémentaire du bit de même rang du premier nombre d'entrée, et l'initialisation de la valeur des signaux de correction de chaque bit estimé est fonction du bit de rang précédent du premier nombre d'entrée, et du bit de même rang du deuxième nombre d'entrée.

Dans cet autre cas, il vient :

$$\begin{cases} U_n^0 = \overline{a_n} \\ R_n^0 = \overline{a_{n-1} \oplus b_n} \end{cases}$$

où :

$U_n^0$ est la valeur initiale du bit estimé de la somme des signaux d'entrée, de rang n, n variant de 0 à N-1,

$R_n^0$ est la valeur initiale du signal de correction du bit estimé de la somme des signaux d'entrée, de rang n, n variant de 1 à N,

$a_n$ et $b_n$ étant les bits de rang n, respectivement des premier et deuxième nombres d'entrée.

L'initialisation des signaux selon ce mode de mise en oeuvre, a pour avantage d'être compatible avec la logique de réversibilité.

Dans un mode de mise en oeuvre, j est égal à N, et le bit de rang n de ladite somme, correspond au bit de rang n estimé de la somme, estimé lors de la $n^{ème}$ étape de traitement.

Dans un autre mode de mise en oeuvre, le procédé comprend en outre à l'issue des j étapes de traitement, une étape de génération de N-1 signaux de propagation, le $q^{ème}$ signal de propagation étant fonction du bit estimé de ladite somme de rang q, de son signal de correction, et du bit estimé de rang q-1 de ladite somme, et dans lequel chaque bit de ladite somme est calculé à partir des $q^{èmes}$ signaux de propagation, tel que q est inférieur au rang du bit considéré.

Selon un autre aspect de l'invention, il est proposé un additionneur permettant d'additionner des signaux d'entrée selon la revendication 11.

Les signaux d'entrée peuvent comprendre en outre une retenue d'entrée.

De préférence, l'additionneur comprend en outre des moyens d'initialisation couplés en amont des moyens de détermination, aptes à initialiser la valeur des bits estimés de ladite somme et la valeur des signaux de correction, les moyens de détermination comprenant j moyens de traitement couplés en série, j étant un entier inférieur ou égal à N, où le $k^{ème}$ moyens de traitement, k variant de 1 à j, comportent :

- lesdits blocs d'estimation des bits de la somme dont le rang n est compris entre k et N, étant estimé à partir du bit estimé de la somme de rang n et du $n^{ème}$ signal de correction, respectivement estimé et élaboré par les moyens de traitement connectés en amont, et
- les moyens de correction aptes à élaborer pour chaque bit de rang n, le $n^{ème}$ signal de correction, à partir des bits estimés de la somme de rang n-1 et de rang n-2, et du $(n-1)^{ème}$ du signal de correction, respectivement estimés et élaboré par les moyens de traitement connectés en amont.

De préférence, pour les $k^{èmes}$ moyens de traitement, chaque bloc d'estimation d'un bit de la somme de rang n, comprend une porte logique de type « OU EXCLUSIF » apte à recevoir en entrée le bit estimé de la somme de rang n et le $n^{ème}$ signal de correction, respectivement estimé et élaboré par les $(k-1)^{èmes}$ moyens de traitement, et dans lequel les moyens de correction d'un bit estimé de la somme de rang n+1, comprennent une autre porte logique de type « OU EXCLUSIF », apte à recevoir en entrée le bit estimé et corrigé de la somme de rang n-1, et le bit de rang (n-2) de la somme estimé et élaboré par les (k-1)$^{ièmes}$ moyens de traitement, et une porte logique de type « ET » couplée à la sortie de l'autre porte logique de type « OU EXCLUSIF », et apte à recevoir en entrée le signal de sortie de ladite autre porte logique et le (n-1)$^{ème}$ signal de correction estimé et élaboré par les (k-1)$^{ièmes}$ moyens de traitement.

Les moyens de traitement peuvent comprendre en outre des moyens d'élaboration aptes à élaborer une retenue de sortie à partir de l'ensemble des N$^{ièmes}$ signaux de correction.

De préférence, les moyens d'initialisation sont aptes à initialiser la valeur de chaque bit à estimer de ladite somme en fonction des bits de même rang des premier et deuxième nombres d'entrée, et aptes à initialiser la valeur du signal de correction de chaque bit à estimer en fonction des bits de rang précédent des premier et deuxième nombres d'entrée.

Selon un mode de réalisation, les moyens d'initialisation comprennent N moyens d'initialisation élémentaires, chacun étant associé à un rang donné, comprenant une porte logique de type « OU EXCLUSIF », apte à recevoir les bits du rang considéré des premier et deuxième nombres d'entrée, et apte à délivrer pour le rang considéré, la valeur initiale du bit à estimer de la somme, et une portes logique de type « ET », apte à recevoir les bits du rang considéré, des premier et deuxième nombres d'entrée, et apte à délivrer la valeur initiale du signal de correction du bit estimé de la somme, du rang suivant le rang considéré.

Selon un autre mode de réalisation, les moyens d'initialisation comprennent N moyens d'initialisation élémentaires, chacun étant associé à un rang donné, comprenant une portes logique inverseuse, apte à recevoir le bits du rang considéré du premier nombre d'entrée, et apte à délivrer pour le rang considéré, la valeur initiale du bit à estimer de la somme, et une porte logique de type « OU EXCLUSIF » à sortie inverseuse, apte à recevoir le bit du rang considéré du premier nombre d'entrée et le bit du rang suivant le rang considéré du deuxième nombre d'entrée, et apte à délivrer la valeur initiale du signal de correction du bit estimé de la somme, du rang suivant le rang considéré.

Selon une première variante, j est égal à N, et le bit de la somme de rang n, correspond au bit de la somme de rang n estimé par les n$^{ièmes}$ moyens de traitement.

Selon une deuxième variante, l'additionneur comprend en outre, des moyens de génération couplés aux j$^{ièmes}$ moyens de traitement, aptes à générer N-1 signaux de propagation, le q$^{ième}$ signal de propagation étant fonction du bit estimé de ladite somme de rang q, de son signal de correction, et du bit estimé de rang q-1 de ladite somme, et des moyens de calcul aptes à calculer chaque bit de ladite somme à partir des q$^{ièmes}$ signaux de propagation, tel que q est inférieur au rang du bit considéré.

Dans ce cas, les moyens de génération peuvent générer un N$^{ième}$ signal de propagation en fonction du bit estimé de rang N, de son signal de correction et du bit estimé de rang N-1. Les moyens de calcul peuvent comprendre en outre un bloc de calcul pouvant calculer un terme de génération de groupe à partir de l'ensemble des signaux de propagation générés et de l'ensemble des signaux de correction, et un terme de propagation de groupe à partir de l'ensemble des signaux de propagation.

Selon un mode de réalisation, si N est pair, le bloc de calcul peut alors comprendre :

- N portes logiques de type « ET », la q$^{ième}$ porte, q variant de 1 à N, étant apte à recevoir k signaux de propagation, k variant de 1 à q, et le k$^{ième}$ signal de correction,
- un réseau de portes logiques de type « OU EXCLUSIF », aptes à additionner l'ensemble des termes délivrés en sortie des portes logiques de type « ET », de façon à élaborer ledit terme de génération de groupe,
- une porte logique supplémentaire de type « ET », apte à multiplier l'ensemble des signaux de propagation de façon à élaborer ledit terme de propagation de groupe.

Selon un autre aspect de l'invention, il est proposé un système comprenant un réseau d'additionneurs selon le premier aspect de l'invention.

Par exemple, le système peut comprendre un réseau d'additionneurs incorporant des additionneurs selon la première ou la deuxième variante.

Par ailleurs, si N est un multiple de 4, le système peut comprendre un réseau d'additionneurs incorporant N/4 additionneurs selon la troisième variante et les différents modes de réalisation en découlant, (et tel que les signaux d'entrée comprennent une retenue d'entrée), couplés en parallèle, chaque additionneur étant apte à additionner N/4 bits successifs du premier et du deuxième nombre binaire d'entrée. Ledit système peut comprendre en outre au moins un module de propagation par groupe (MPGi) apte à recevoir le terme de génération de groupe et le terme de propagation de groupe de chaque additionneur, et aptes à élaborer à partir du terme de génération de groupe et du terme de propagation de groupe d'un additionneur donné, une retenue pour l'additionneur additionnant les N/4 bits suivants.

Une structure de calcul simple et itérative, peut également être obtenue en intégrant au système un deuxième réseau d'additionneurs au niveau bit dans lequel le signal de correction est propagé en cascade du module de rang (n) au module de rang (n+1) sur le modèle dit « Ripple-Carry-Adder » en langue anglo-saxonne connu de l'homme de métier.

D'autres avantages et caractéristiques de l'invention apparaîtront à l'examen de la description détaillée d'un mode de mise en oeuvre du procédé et de plusieurs modes de réalisation de l'invention nullement limitatifs, et des dessins annexés sur lesquels :

- la figure 1 illustre un mode de mise en oeuvre du procédé selon l'invention,
- la figure 2 représente un schéma fonctionnel d'un mode de réalisation d'un additionneur selon l'invention,
- la figure 3 illustre plus en détail un mode de réalisation d'un additionneur selon l'invention,
- la figure 4 illustre une variante d'un mode de réalisation d'un additionneur selon l'invention,
- la figure 5 illustre un autre mode de réalisation d'un additionneur selon l'invention,
- la figure 6 illustre un autre mode de réalisation d'un additionneur selon l'invention,
- les figures 7 et 8 illustrent des modes de réalisation d'un système d'additionneur selon l'invention.
- la figure 9 illustre un autre mode de réalisation d'un additionneur selon l'invention.

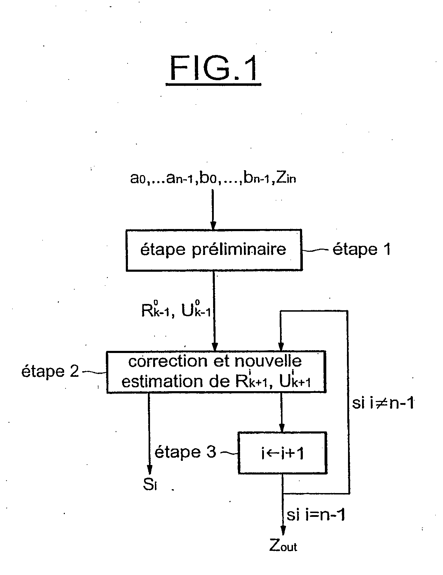

On se rapporte à la figure 1 qui représente un organigramme avec les différentes étapes d'un mode de mise en oeuvre d'un procédé selon l'invention.

Lors d'une première étape (étape préliminaire, étape 1), on initialise différents signaux $R_{n-1}^0$, $U_{n-1}^0$, mis en oeuvre pour réaliser la somme de deux nombres binaires, 2respectivement A $(a_0, ..., a_{n-1})$ et B $(b_0,...b_{n-1})$ et d'une retenue éventuelle $Z_{in}$. On verra ci-après plus en détail la définition des termes R et U.

Au cours d'une étape 2, on corrige les signaux R et U précédemment calculés puis on en effectue une nouvelle estimation (étape 2 ; correction et nouvelle estimation de $R_{n+1}^j$, $U_{n+1}^j$).

A l'issue de l'étape 2, on génère le bit de la somme des signaux d'entrée (A, B, $Z_{in}$) de rang n, Sn.

Puis au cours d'une étape 3, on incrémente la valeur de i d'une unité (étape 3, i i+1), puis on réitère les étapes 2 et 3 de façon à générer l'ensemble des bits de la somme S.

Lorsque l'on a généré le dernier bit de la somme S, on calcule la retenue de sortie $Z_{out}$.

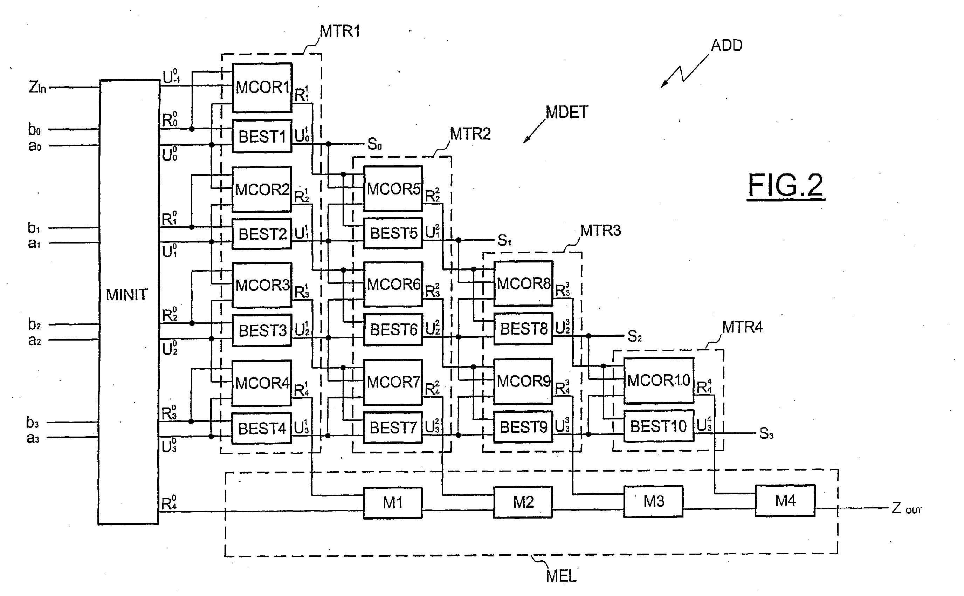

On se rapporte à présent à la figure 2 qui décrit schématiquement un mode de réalisation d'un additionneur permettant de mettre en oeuvre l'invention, par exemple l'organigramme de la figure 1. La référence ADD désigne un additionneur selon un mode de réalisation de l'invention. Il comprend des moyens de détermination MDET, aptes à recevoir en entrée une retenue d'entrée $Z_{in}$ et deux nombres d'entrée binaires A et B chacun ayant dans cet exemple quatre bits, respectivement $a_0, ...a_3$ et $b_0, ...b_3$.

L'ensemble des bits ainsi que la retenue d'entrée $Z_{in}$ sont délivrés à des moyens d'initialisation MINIT. Les moyens d'initialisation MINIT initialisent les signaux R et U selon un algorithme décrit plus en détail ci-après.

Par conséquent, les moyens d'initialisation MINIT délivrent en sortie respectivement les signaux $U_0^0, ...,U_3^0$ et $R_0^0, ..., R_3^0$.

Les moyens d'initialisation MINIT délivrent en outre les signaux $U_{-1}^0$ dont l'initialisation sera détaillée plus en détail ci-après et $R_4^0$ qui correspond à une première estimation de la valeur de sortie de l'additionneur ADD.

Les moyens d'initialisation MINIT sont connectés à un premier étage de traitement MTR1 apte à délivrer une première estimation des bits de la somme S, qui correspondent respectivement aux signaux $U_0^1, ..., U_3^1$ et des signaux de correction de ces bits estimés de la somme, qui sont respectivement les signaux $R_1^1, ..., R_3^1$.

Les bits estimés de la somme $U_0^1, ..., U_3^1$ sont respectivement estimés à partir des blocs d'estimation BEST1, ...BEST4.

Le premier étage de traitement MTR1 délivre également un signal de correction $R_4^1$ de la retenue de sortie, $R_4^0$.

Les signaux de correction $R_1^1, ..., R_4^1$ sont respectivement élaborés à l'aide des moyens de correction, respectivement MCOR1, ...MCOR4.

Dans ce mode de réalisation, le premier étage de traitement MTR1, délivre le premier bit S0 de la somme S, qui correspond à la première estimation de ce bit, c'est-à-dire $U_0^1$.

De même, les moyens de détermination MDET comprennent un deuxième étage de traitement MTR2. Celui-ci incorpore les moyens de correction MCOR5, MCOR6 et MCOR7 et les blocs d'estimation BEST5, BEST6 et BEST7.

Ces derniers délivrent respectivement les signaux de correction $R_2^2, ..., R_4^2$ et les bits estimés de la somme $U_1^2, ..., U_3^2$.

Le bit estimé $U_1^2$ correspond au deuxième bit de la somme S1.

Des troisièmes moyens de traitement MTR3 sont connectés à la sortie des moyens MTR2. Ces moyens MTR3 comprennent des blocs de correction MCOR8 et MCOR9 et des moyens d'estimation BEST8 et BEST9.

De même que pour les étages précédents, ces derniers délivrent les signaux de correction $R_3^3$ et $R_4^3$ et les bits estimés $U_2^3$, qui correspond au troisième bit de la somme S2, et $U_3^3$.

Les moyens de traitement MTR4 sont connectés à la sortie des moyens de traitement MTR3 et comprennent les moyens de correction MCOR10 et le bloc d'estimation BEST10, délivrant respectivement le signal de correction $R_4^4$ et le bit estimé $U_3^4$, ce dernier correspondant au dernier bit de la somme S3.

L'ensemble des blocs d'estimation BESTi, i variant de 1 à 10, forment les moyens d'estimation compris dans les moyens de détermination MDET.

Chacun des moyens de correction MCORi, i variant de 1 à 10, délivrant un signal de correction $R_n^j$ reçoit en entrée les signaux $U_{n-1}^{j-1}$, $U_{n-2}^{j-1}$ et le signal de correction $R_{n-1}^{j-1}$, n et j variant dans cet exemple de 0 à 3.

Dans le cas particulier de MCOR1, le signal $U_{-1}^0$ (défini ci-après) est délivré en entrée, de façon à pouvoir élaborer le signal de correction $R_1^1$.

Les moyens de détermination comprennent également des moyens d'élaboration MEL, comprenant quatre moyens M1, M2, M3 et M4 connectés en série.

Les moyens Mi, i variant dans ce cas de 1 à 4, reçoivent en entrée le signal de sortie des moyens Mi-1 et le signal de correction $R_4^i$.

Les moyens M1 reçoivent en entrée la première estimation de la retenue de sortie, c'est-à-dire $R_4^0$, délivrée par les moyens d'initialisation MINIT.

Les moyens M4 délivrent en sortie la valeur finale de la retenue de sortie $Z_{out}$.

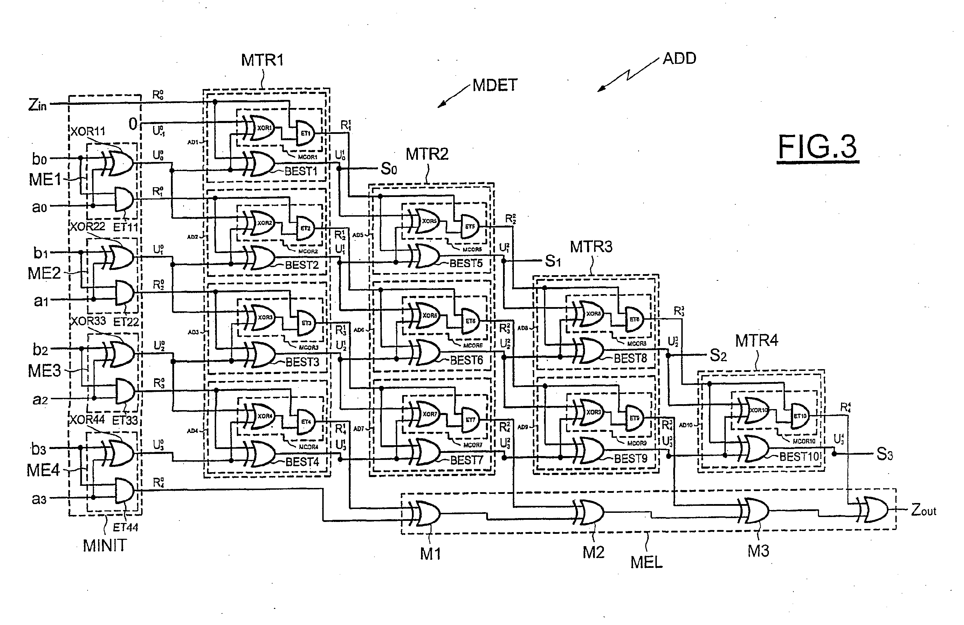

On se rapporte à présent à la figure 3 qui décrit plus en détail les moyens d'initialisation MINIT, les moyens de correction MCORi, les blocs d'estimation BESTi, i variant de 1 à 10, et les moyens M1, M2, M3 et M4 des moyens d'élaboration MEL.

Dans ce mode de réalisation, chaque bloc d'estimation BESTi, incorporé dans un étage de rang n, n variant de 0 à 3, et i variant de 1 à 10, comprend une porte logique de type « OU EXCLUSIF ».

Les moyens de correction MCORi d'un étage de rang n comprennent une porte logique de type « OU EXCLUSIF », référencée XORi, apte à recevoir le bit estimé de la somme $U_{n-1}^{j-1}$ et le bit estimé de la somme $U_{n-2}^{j-1}$. En outre, les moyens MOCORi comprennent une porte logique de type « ET », référencée ETi, et apte à recevoir le signal de sortie délivré par la porte logique XORi et le signal de correction $R_{n-1}^{j-1}$.

Par conséquent, les bits estimés $U_n^j$ et les signaux de correction $R_n^j$ sont déterminés à partir des équations suivantes dites « équations de propagation » :

$$\begin{cases} U_n^j = U_n^{j-1} \oplus R_n^{j-1} \\ R_n^j = \left( U_{n-1}^{j-1} \oplus U_{n-2}^{j-1} \right) R_{n-1}^{j-1} \end{cases}$$

En développant les équations de propagation ci-dessus, on obtient :

$$\begin{cases} S_n = U_n^j = U_n^0 \oplus R_n^0 \oplus R_n^1 \oplus ... \oplus R_n^{j-2} \oplus R_n^{j-1} \\ R_n^j = \left( U_{n-1}^0 \oplus R_{n-1}^0 \oplus U_{n-2}^0 \oplus 1 \right)\left( U_{n-2}^0 \oplus R_{n-2}^0 \oplus U_{n-3}^0 \oplus 1 \right)...\left( U_{n-i}^0 \oplus R_{n-i}^0 \oplus U_{n-i-1}^0 \oplus 1 \right) R_{n-i}^0 \end{cases}$$

où $S_n$ représente le bit d'indice n de la somme des nombres d'entrée A, B et de la retenue entrante $Z_{in}$.

Les moyens M1, M2, M3 M4 sont chacun réalisés à partir d'une porte logique de type « OU EXCLUSIF ».

La retenue de sortie $Z_{out}$ peut être exprimée quant à elle selon l'expression :

$$Z_{out} = R_4^0 \oplus R_4^1 \oplus R_4^2 \oplus R_4^3 \oplus R_4^4$$

La figure 3 illustre un premier mode de réalisation des moyens d'initialisation MINIT.

Dans ce mode de réalisation, le signal de correction $R_0^0$ correspond à la retenue d'entrée $Z_{in}$.

La variable $U_{-1}^0$ est affectée ici de la valeur « 0 ».

Les moyens d'initialisation MINIT comprennent quatre moyens d'initialisation élémentaire ME1, ..., ME4.

Chaque moyen MEi, i variant ici de 1 à 4, comprend une porte logique de type « OU EXCLUSIF » et une porte logique de type « ET » respectivement référencées XORii et ETii. Chacune de ces portes reçoit respectivement les bits des nombres d'entrée $a_{n-1}$ et $b_{n-1}$.

Chaque porte logique ETii délivre en sortie le signal de correction $R_n^0$.

Chaque porte logique XORii délivre en sortie une valeur initiale du bit estimé $U_{n-1}^0$.

Par conséquent, les équations implémentées par les moyens d'initialisation dans cet exemple sont :

$$\begin{cases} U_n^0 = a_n \oplus b_n \\ R_n^0 = a_{n-1} \cdot b_{n-1} \end{cases}$$

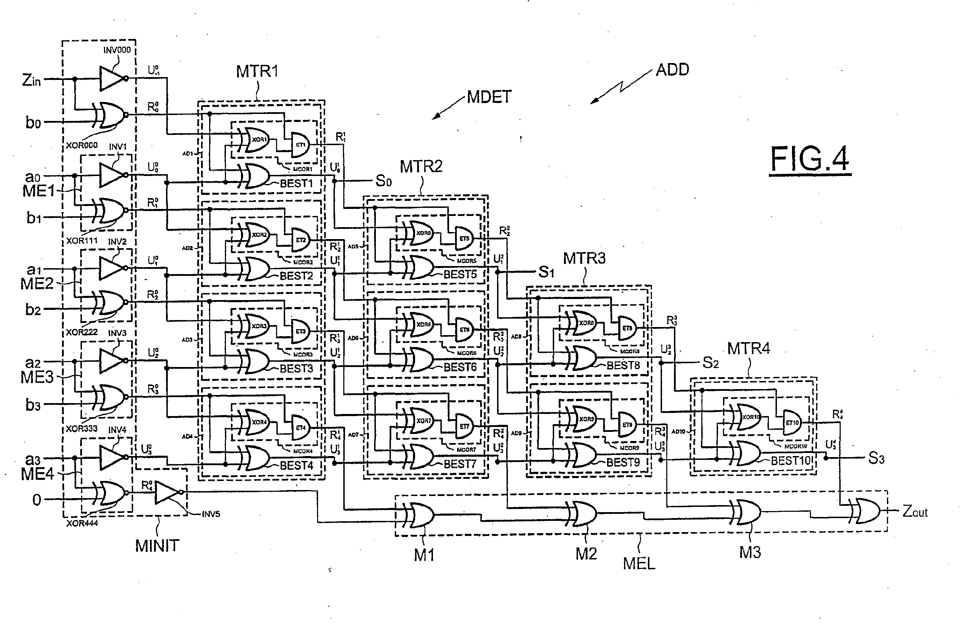

On se réfère à présent à la figure 4 où les moyens d'initialisation MINIT sont réalisés selon un autre mode de réalisation.

Ce mode de réalisation de par l'implémentation de ces nouveaux moyens d'initialisation, a pour avantage d'être compatible avec la logique de réversibilité.

Dans ce mode de réalisation, les moyens élémentaires d'initialisation MEi comprennent chacun une porte inverseuse INViii, i variant de 1 à 4, apte à recevoir le bit $a_{n-1}$ et à délivrer la valeur initiale du bit estimé de la somme $U_{n-1}^0$.

Les moyens MEi comprennent également une porte logique de type « OU EXCLUSIF » à sortie inverseuse, référencée XORiii et recevant en entrée le bit $a_{n-1}$ et le bit $b_n$. Chaque porte logique XORiii délivre en sortie le signal de correction $R_n^0$.

La porte logique XOR444 reçoit en entrée à la place du bit du deuxième nombre d'entrée B, la valeur binaire « 0 ».

Par ailleurs, la cellule XOR444 est connectée aux moyens d'élaboration MEL par l'intermédiaire d'une autre porte inverseuse INV5.

Dans ce nouveau mode de réalisation des moyens MINIT, le signal de correction $R_0^0$ est délivré par une porte logique de type « OU EXCLUSIF » à sortie inverseuse, référencée XOR000, recevant en entrée la retenue $Z_{in}$ et le bit d'entrée $b_0$.

La variable d'initialisation $U_{-1}^0$ est délivrée par une porte inverseuse INV000 recevant en entrée la retenue $Z_{in}$.

Par conséquent, les termes $U_n^0$ et $R_n^0$, n variant de 0 à 4, sont donnés par l'équation suivante :

$$\begin{cases} U_n^0 = \overline{a_n} \\ R_n^0 = \overline{a_{n-1} \oplus b_n} \end{cases}$$

où l'on impose $U_4^0 = 1$.

Dans ce cas, l'expression, de la retenue de sortie $Z_{out}$ est égale à:

$$Z_{out} = U_4^0 \oplus R_4^0 \oplus R_4^1 \oplus R_4^2 \oplus R_4^3 \oplus R_4^4 = 1 \oplus R_4^0 \oplus R_4^1 \oplus R_4^2 \oplus R_4^3 \oplus R_4^4$$

Dans le tableau ci-dessous, on effectue par exemple l'addition de deux nombres binaires A = 1000 et B = 1111, avec une retenue d'entrée $Z_{in}$ = 1.

| Indice n | 3 | 2 | 1 | 0 | $Z_{in}$ |
|---|---|---|---|---|---|
| A | 1 | 0 | 0 | 0 | 1 |
| B | 1 | 1 | 1 | 1 | |
| $U_n^0 = \overline{a_n}$ | 0 | 1 | 1 | 1 | 0 |
| $R_n^0 = \overline{b_n \oplus a_{n-1}}$ | 0 | 0 | 0 | 1 | |
| $U_n^1 = U_n^0 \oplus R_n^0$ | 0 | 1 | 1 | 0 | |
| $R_n^1 = \left( U_{n-1}^0 \oplus U_{n-2}^0 \right).R_{n-1}^0$ | 0 | 0 | 1 | | |
| $U_n^2 = U_n^1 \oplus R_n^1$ | 0 | 1 | 0 | | |
| $R_n^2 = \left( U_{n-1}^1 \oplus U_{n-2}^1 \right).R_{n-1}^1$ | 0 | 1 | | | |
| $U_n^3 = U_n^2 \oplus R_n^2$ | 0 | 0 | | | |
| $R_n^3 = \left( U_{n-1}^2 \oplus U_{n-2}^2 \right).R_{n-1}^2$ | 1 | | | | |
| $U_n^4 = U_n^3 \oplus R_n^3$ | 1 | | | | |
| $R_n^4 = \left( U_{n-1}^3 \oplus U_{n-2}^3 \right).R_{n-1}^3$ | | | | | |
| S | 1 | 0 | 0 | 0 | |

On considère dans cet exemple les moyens de détermination MDET comprenant les moyens d'initialisation représentés sur la figure 4.

Au cours d'une première étape, on calcule les valeurs d'initialisation $U_n^0$ et $R_n^0$ selon les expressions définies ci-avant. Puis on effectue une première estimation de la somme S en calculant les bits $U_n^1$. Ensuite, on détermine les signaux de correction $R_n^1$. On répète successivement ces étapes pour les autres bits de la somme S. Finalement, la somme S est égale à 1000. On se retrouve alors dans le cas d'une propagation standard de retenue.

Dans un autre exemple illustré dans le tableau ci-dessous, on additionne un nombre A égal à 0111 et un nombre B égal à 0000, la retenue d'entrée $Z_{in}$ étant nulle.

| Indice n | 3 | 2 | 1 | 0 | $Z_{in}$ |
|---|---|---|---|---|---|
| A | 0 | 1 | 1 | 1 | 0 |
| B | 0 | 0 | 0 | 0 | |
| $U_n^0 = \overline{a_n}$ | 1 | 0 | 0 | 0 | 1 |
| $R_n^0 = \overline{b_n \oplus a_{n-1}}$ | 0 | 0 | 0 | 1 | |
| $U_n^1 = U_n^0 \oplus R_n^0$ | 1 | 0 | 0 | 1 | |
| $R_n^1 = \left(U_{n-1}^0 \oplus U_{n-2}^0\right).R_{n-1}^0$ | 0 | 0 | 1 | | |
| $U_n^2 = U_n^1 \oplus R_n^1$ | 1 | 0 | 1 | 1 | |
| $R_n^2 = \left(U_{n-1}^1 \oplus U_{n-2}^1\right).R_{n-1}^1$ | 0 | 1 | | | |
| $U_n^3 = U_n^2 \oplus R_n^2$ | 1 | 1 | 1 | 1 | |
| $R_n^3 = \left(U_{n-1}^2 \oplus U_{n-2}^2\right).R_{n-1}^2$ | 1 | | | | |
| $U_n^4 = U_n^3 \oplus R_n^3$ | 0 | 1 | 1 | 1 | |
| $R_n^4 = \left(U_{n-1}^3 \oplus U_{n-2}^3\right).R_{n-1}^3$ | 0 | | | | |
| S | 0 | 1 | 1 | 1 | |

En répétant les mêmes opérations que celles décrite ci-avant, la somme S est égale à 0111.

On se retrouve dans le cas d'une propagation de correction car la valeur estimée initiale 1000 est devenue après correction la valeur 0111.

Bien entendu, il est possible de combiner plusieurs additionneurs tels que décrits ci-avant, au sein d'un même système, pour additionner plus de deux nombres binaires.

Par exemple, pour additionner 3 nombre binaire, A, B et C, le système en question peut comprendre un premier additionneur et un deuxième additionneur. Le premier additionneur reçoit en entrée le premier et le deuxième nombres binaires respectivement A et B et élabore en sortie une somme A + B.

Le deuxième additionneur reçoit en entrée la somme intermédiaire A + B ainsi que le troisième nombre binaire C et élabore une somme S correspondant à la somme des trois nombres binaires d'entrée A, B et C.

Pour chaque nombre binaire supplémentaire à additionner, le système comprend un additionneur supplémentaire.

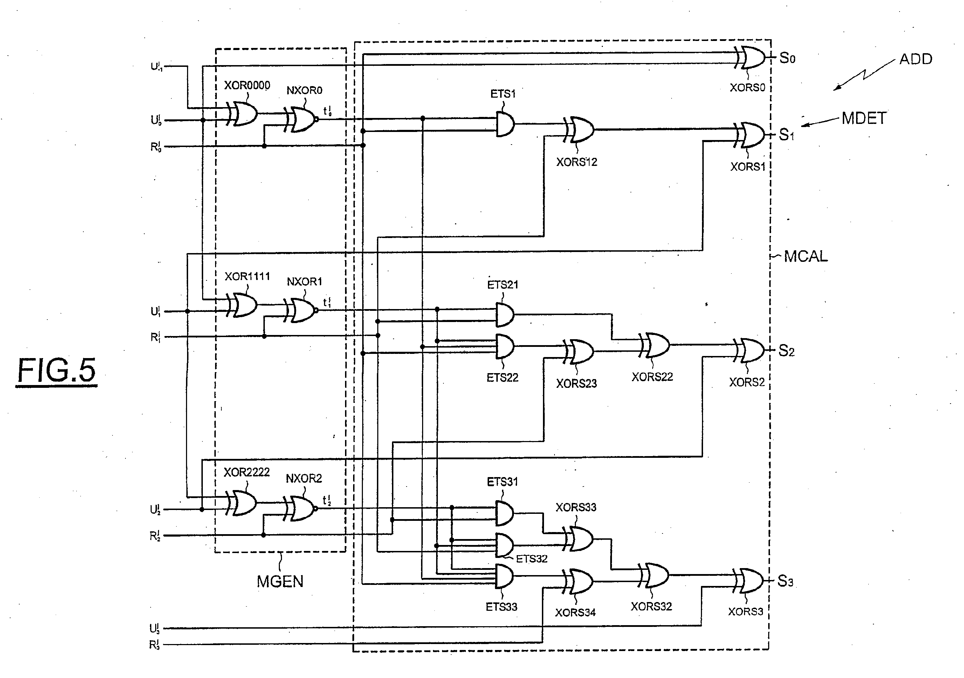

On se réfère à présent à la figure 5.

Le mode de réalisation des moyens de détermination MDET représentés sur la figure 5 comprend des moyens de génération aptes à recevoir les signaux $U_{-1}^j$, $U_0^j$, $R_0^j$,..., $U_3^j$, $R_3^j$.

Ces signaux sont déterminés par un additionneur selon l'invention, par exemple selon l'un des modes de réalisation présentés sur les figures 3 ou 4.

Les signaux $U_{-1}^j$, $U_0^j$, $R_0^j$, ..., $U_2^j$, $R_2^j$ sont délivrés en entrée de moyens de génération MGEN qui élaborent des signaux de propagation $t_0^j$, $t_1^j$ et $t_2^j$, qui sont calculé à partir de l'expression :

$$t^{j}_{n-1} = \left( U^{j}_{n-1} \oplus R^{j}_{n-1} \oplus U^{j}_{n-2} \oplus 1 \right) = \overline{\left( U^{j}_{n-1} \oplus R^{j}_{n-1} \oplus U^{j}_{n-2} \right)};$$

avec n variant de 1 à 3, et j étant un entier quelconque, compris ici entre 0 et 3.

Ces moyens de génération permettent d'accélérer le calcul des bits S0, S1, S2 et S3, qui sont alors obtenus par les relations ci-dessous :

$$\begin{cases} s_0 = U^{j+1}_0 = U^{j}_0 \oplus R^{j}_0 \\ s_1 = U^{j+2}_1 = U^{j}_1 \oplus R^{j}_1 \oplus t^{j}_0 \cdot R^{j}_0 \\ s_2 = U^{j+3}_2 = U^{j}_2 \oplus R^{j}_2 \oplus t^{j}_1 \cdot R^{j}_1 \oplus t^{j}_1 \cdot t^{j}_0 \cdot R^{j}_0 \\ s_3 = U^{j+4}_3 = U^{j}_3 \oplus R^{j}_3 \oplus t^{j}_2 \cdot R^{j}_2 \oplus t^{j}_2 \cdot t^{j}_1 \cdot R^{j}_1 \oplus t^{j}_2 \cdot t^{j}_1 \cdot t^{j}_0 \cdot R^{j}_0 \end{cases}$$

Ce mode de réalisation des moyens MDET est particulièrement adapté dans le cadre de l'utilisation d'un additionneur pour effectuer une division.

Pour l'élaboration d'un signal de propagation $t_n^j$, n variant de 0 à 2, les moyens de génération MGEN comprennent une porte logique de type « OU EXCLUSIF », référencée XORiiii apte à recevoir en entrée le signal $U_n^j$ et le signal $U_{n-1}^j$.

La porte logique XORiiii est connectée à une porte logique de type « OU EXCLUSIF » à sortie inverseuse, référencée NXORi. La porte logique NXORi reçoit en entrée le signal de sortie délivré par la porte logique XORiiii et le signal $R_n^j$.

La porte NXORi délivre en sortie le signal de propagation $t_n^j$.

Les moyens de génération MGEN sont couplés en sortie à des moyens de calcul, de manière à calculer les bits de la somme S, soit, S0, ..., S3.

Le bit S0 est alors élaboré à l'aide d'une porte logique de type « OU EXCLUSIF » référencée XORS0. Celle-ci reçoit en entrée le signal $R_0^j$ et le bit estimé de la somme $U_0^j$.

Le bit S1 de la somme S est délivré par une porte logique de type « OU EXCLUSIF » référencée XORS1. Celle-ci reçoit en entrée le bit estimé de la somme $U_1^j$ et le signal de sortie d'une autre porte logique de type « OU EXCLUSIF » référencée XORS12.

La porte XORS12 reçoit en entrée le signal de correction $R_1^j$ et le signal de sortie d'une porte logique de type « ET » référencée ETS1. Cette dernière reçoit en entrée le signal de propagation $t_0^j$ et le signal de correction $R_0^j$.

Le bit S2 de la somme S est délivré par une porte logique de type « OU EXCLUSIF » référencée XORS2, qui reçoit en entrée le bit estimé $U_2^j$ et le signal de sortie d'une autre porte logique de type « OU EXCLUSIF » référencée XORS22.

La porte logique XORS22 reçoit en entrée le signal de sortie d'une porte logique de type « OU EXCLUSIF » référencée XORS23 et le signal de sortie d'une porte logique de type « ET » référencée ETS21. Cette dernière reçoit en entrée le signal de propagation $t_1^j$ et le signal de correction $R_1^j$.

La porte logique XORS23 reçoit en entrée le signal de correction $R_2^j$ et le signal de sortie d'une autre porte logique de type « ET » référencée ETS22 qui reçoit en entrée des signaux de propagation $t_1^j$ et $t_0^i$ et le signal de correction $R_0^j$.

Le bit S3 de la somme S est délivré par une porte logique XORS3 de type « OU EXCLUSIF ».

Celle-ci reçoit en entrée le bit estimé $U_3^j$ et le signal de sortie d'une autre porte logique de type « OU EXCLUSIF » référencée XORS32.

Celle-ci reçoit en entrée les signaux de sortie de deux autres portes logiques de type « OU EXCLUSIF » respectivement XORS34 et XORS33.

La porte logique XORS34 reçoit en entrée le signal de correction $R_3^j$ et le signal de sortie d'une porte logique de type « ET » référencée ETS33 qui reçoit en entrée les signaux de propagation $t_0^j$, $t_1^j$ et $t_2^j$ et le signal de correction $R_0^j$.

La porte logique référencée XORS33 reçoit en entrée les signaux de sortie de deux autres portes de type « ET » respectivement ETS31 et ETS32.

La porte ETS31 reçoit en entrée le signal de propagation $t_2^j$ et le signal de correction $R_2^j$.

La porte logique ETS32 reçoit en entrée les signaux de propagation $t_1^j$ et $t_2^j$ et le signal de correction $R_1^j$.

Les signaux de propagation élaborés par ce type de moyens de détermination peuvent être utilisés au sein des additionneurs de type CLA (« Carry-Look-Ahead » en langue anglaise), pour additionner 2n bits. Pour ce faire on couple en parallèle plusieurs moyens MDET aptes à générer des signaux de propagation, appelés dans ce cas signaux de propagation de groupe, ainsi que des signaux de génération de groupe dans le cas d'une addition de 2n bits comme décrit ci-après.

L'ensemble des moyens MDET sont combinés à un module dit de propagation par groupe bien connu de l'homme du métier (voir par exemple l'ouvrage de référence « Advanced Computer Arithmetic Design» M.J. Flynn, S.F. Oberman, 2001, Editions John Wiley and sons, ISBN 0-471-41209-0 pages 4 et 5). Le module de propagation par groupe élabore à partir des signaux de génération de groupe et des signaux de propagation de groupe générés par les moyens MDET qui additionnent les bits n, n+1, n+2 et n+3 (par exemple), une retenue (ou terme de génération entrant) pour les moyens MDET qui additionnent les bits n+4, n+5, n+6 et n+7.

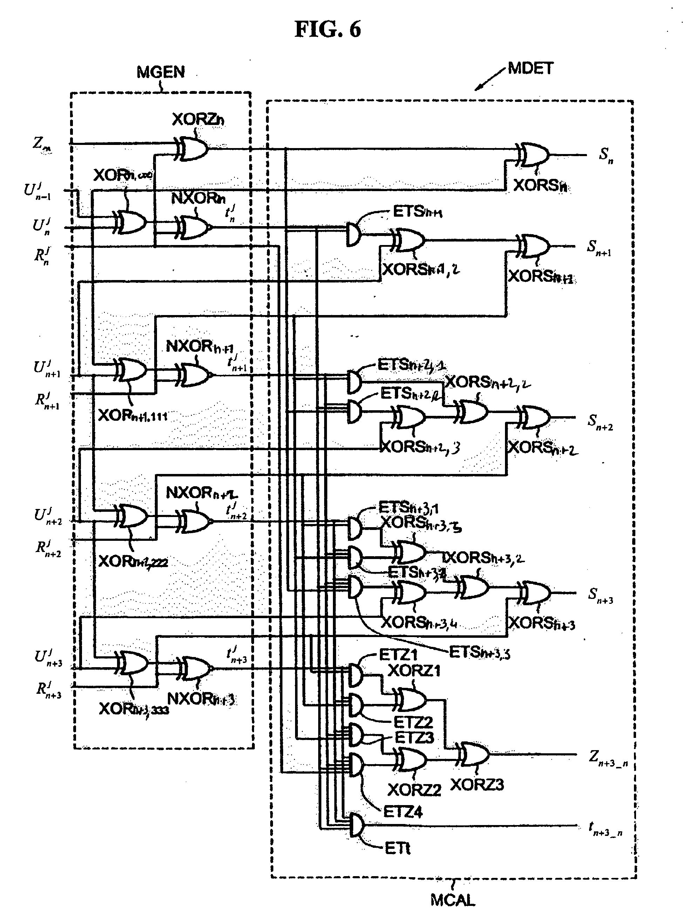

La figure 6 représente des moyens MDET utilisés dans le cadre d'un couplage avec d'autres moyens MDET de façon à former un additionneur de type CLA aptes à additionner 2n bits.

Les moyens MDET de la figure 6 sont utilisés pour élaborer les termes $S_n$, ..., $S_{n+3}$ de la somme S, et les signaux dits de génération de groupe et de propagation de groupe, respectivement $Z_{n+3\_i}$ et $t_{n+3\_i}$, à destination du module élaborant le terme de génération entrant des moyens MDET suivants, comme explicité ci-après.

Les moyens MGEN de la figure 6 comprennent en outre, par rapport aux moyens représentés sur la figure 5, une porte XORZn recevant en entrée la retenue (terme de génération entrant) Zn générée par les moyens MDET connectés en amont et le signal $Ri_n$. La sortie de la porte XORZn est connectée en entrée des portes XORSn, ETSn+1, ETSn+1,2, ETSn+3,3.

De plus les moyens MGEN comprennent deux portes logiques XORn+3,333 et NXORn+3 respectivement de type « OU EXCLUSIF » et « OU EXCLUSIF à sortie inverseuse ».

La porte XORn+3,333 reçoit en entrée le signal $Uj_{n+3}$ et $Uj_{n+2}$. Sa sortie est connectée en entrée de la porte NXORn+3.

La porte NXORn+3 reçoit également en entrée le signal $Rj_{n+3}$ et délivre en sortie un autre signal de propagation $tj_{n+3}$.

Par ailleurs, le bit $Z_{n+3\_i}$ est délivré par une porte logique XORZ3 de type « OU EXCLUSIF ».

Celle-ci reçoit en entrée les signaux de sortie de deux autres portes logiques de type « OU EXCLUSIF » respectivement référencée XORZ1 et XORZ2.

La porte logique XORZ1 reçoit en entrée les signaux de sortie de deux portes logiques de type « ET » respectivement référencées ETZ1 et ETZ2.

La porte logique XORZ2 reçoit en entrée les signaux de sortie de deux portes logiques de type « ET » respectivement référencées ETZ3 et ETZ4.

La porte logique ETZ1 reçoit en entrée le signal de propagation $t_{n+3}{}^j$ et le signal de correction $R_{n+3}{}^j$.

La porte logique ETZ2 reçoit en entrée les signaux de propagation $t_{n+3}{}^j$ et $t_{n+2}{}^j$ et le signal de correction $R_{n+2}{}^j$.

La porte logique ETZ3 reçoit en entrée les signaux de propagation $t_{n+3}{}^j$ et $t_{n+2}{}^j$, $t_{n+1}{}^j$ et le signal de correction $R_{n+1}{}^j$.

La porte logique ETZ4 reçoit en entrée les signaux de propagation $t_{n+3}{}^j$ $t_{n+2}{}^j$, $t_{n+1}{}^j$, $t_n{}^j$ et le signal de correction $R_n{}^j$.

Enfin, les moyens MCAL comprennent également une autre porte logique de type « ET », référencée ETt recevant en entrée les signaux de propagation $t_{n+3}{}^j$ et $t_{n+2}{}^j$, $t_{n+1}{}^j$, $t_n{}^j$ et délivrant en sortie le signal $t_{n+3\_i}$.

Les termes de la somme S et les signaux $Z_{n+3\_i}$ et $t_{n+3\_i}$ sont donc générés selon les équations suivantes :

$$\begin{cases} s_n = U_n^j \oplus \left( R_n^j \oplus z_{na} \right) \\ s_{n+1} = U_{n+1}^j \oplus R_{n+1}^j \oplus t_n^j \cdot \left( R_n^j \oplus z_{na} \right) \\ s_{n+2} = U_{n+2}^j \oplus R_{n+2}^j \oplus t_{n+1}^j \cdot R_{n+1}^j \oplus t_{n+1}^j \cdot t_n^j \cdot \left( R_n^j \oplus z_{na} \right) \\ s_{n+3} = U_{n+3}^j \oplus R_{n+3}^j \oplus t_{n+2}^j \cdot R_{n+2}^j \oplus t_{n+2}^j \cdot t_{n+1}^j \cdot R_{n+1}^j \oplus t_{n+2}^j \cdot t_{n+1}^j \cdot t_n^j \cdot \left( R_n^j \oplus z_{na} \right) \\ z_{n+3\_n} = t_{n+3}^j \cdot R_{n+3}^j \oplus t_{n+3}^j \cdot t_{n+2}^j \cdot R_{n+2}^j \oplus t_{n+3}^j \cdot t_{n+2}^j \cdot t_{n+1}^j \cdot R_{n+1}^j \oplus t_{n+3}^j \cdot t_{n+2}^j \cdot t_{n+1}^j \cdot t_n^j \cdot R_n^j \\ t_{n+3\_n} = t_{n+3}^j \cdot t_{n+2}^j \cdot t_{n+1}^j \cdot t_n^j \end{cases}$$

avec $t_n^j = \left( \overline{U_n^j \oplus R_n^j \oplus U_{n-1}^j} \right)$ et Zn le terme de génération entrant.

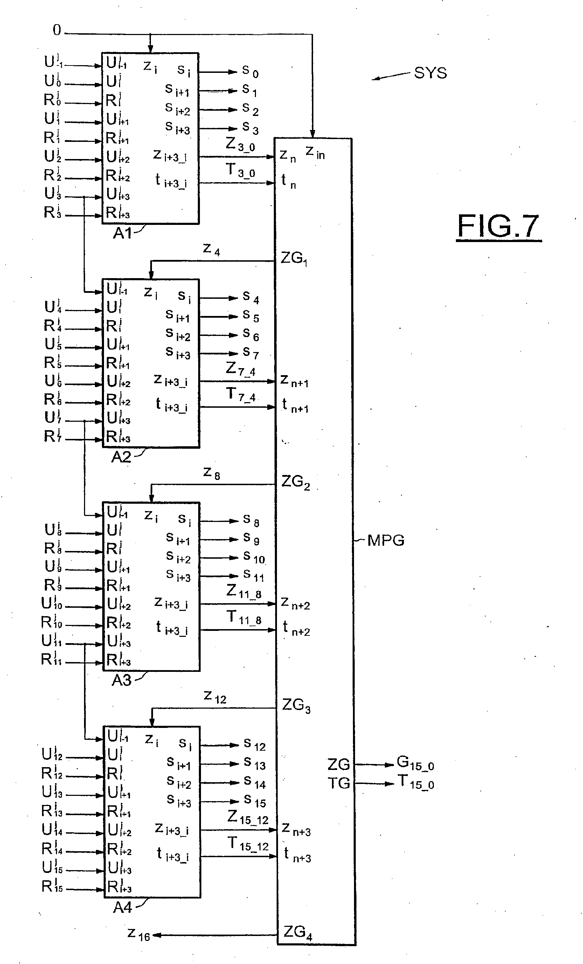

On se réfère à présent à la figure 7 qui représente un additionneur sur plusieurs niveaux et plus précisément un additionneur 16 bits avec propagation de retenue par groupe.

Ce type d'additionneur, réalisé de façon classique, est bien connu de l'homme du métier.

L'additionneur 16 bits SYS comprend quatre blocs $A_1$, $A_2$, $A_3$ et $A_4$ correspondant aux moyens MDET tels que décrits sur la figure 6.

Le premier bloc $A_1$ reçoit en entrée les signaux $U^j_{-1}$, $U^j_0$, ..., $U^j_3$, $R^j_0$, ..., $R^j_3$ et la retenue d'entrée $Z_n$ (0 dans ce cas), et délivre en sortie les quatre premiers bits de la somme résultante $S_0$, ....$S_3$, le signal de génération par groupe $Z_{3\_0}$ telle que définie dans la figure 6, ainsi que le signal de propagation par groupe $T_{3\_0}$ (les signaux $U^j_{-1}$, $U^j_0$, ..., $U^j_3$, $R^j_0$, ..., $R^j_3$ ont été élaborés par des moyens d'initialisation tels que décrits ci-avant, non représentés ici à des fins de simplification).

Ces signaux sont délivrés à un module de propagation par groupe référencé MPG, qui reçoit en entrée la retenue résultante $Z_{3\_0}$ du premier bloc $A_1$, le signal de propagation par groupe $t_{3\_0}$ et la retenue d'entrée $Z_{in}$.

Le module de propagation par groupe MPG élabore le terme de génération entrant $Z_4$ du bloc A2.

De même, les blocs $A_2$, $A_3$ et $A_4$ reçoivent respectivement les signaux d'entrée $U^j_4$, ..., $U^j_7$, $R^j_4$, ..., $R^j_7$ et $U^j_8$, ..., $U^j_{11}$, $R^j_8$, ..., $R^j_{11}$ et $U^j_{12}$, ..., $U^j_{15}$, $R^j_{12}$, ..., $R^j_{15}$, ainsi que les termes de génération entrant $Z_4$, $Z_8$ et $Z_{12}$ élaborés par le module de propagation MPG.

Le bloc $A_2$ délivre en sortie les bits $S_4$, ... $S_7$ de la somme S, le bloc A3 délivre les bits de sortie $S_8$, ..., $S_{11}$ et le bloc $A_4$ délivre les bits de la somme $S_{12}$, ..., $S_{15}$.

Le terme S4 est établi grâce à la relation suivante :

$$S_4 = U^j_4 \oplus R^j_4 \oplus Z_{3\_0},$$

avec : $Z_{3\_0} = t^j_3 \cdot R^j_3 \oplus t^j_3 \cdot t^j_2 \cdot R^j_2 \oplus t^j_3 \cdot t^j_2 \cdot t^j_1 \cdot R^j_1 \oplus t^j_3 \cdot t^j_2 \cdot t^j_1 \cdot t^j_0 \cdot R^j_0.$

De même, on a: $S_8 = U^j_8 \oplus R^j_8 \oplus Z_{7\_0},$

avec : $Z_{7\_0} = t^j_7 \cdot R^j_7 \oplus t^j_7 \cdot t^j_6 \cdot R^j_6 \oplus t^j_7 \cdot t^j_6 \cdot t^j_5 \cdot R^j_5 \oplus t^j_7 \cdot t^j_6 \cdot t^j_5 \cdot t^j_4 \cdot R^j_4 \oplus t^j_7 \cdot t^j_6 \cdot t^j_5 \cdot t^j_4 \cdot Z_{3\_0}.$

S 16 est obtenu de la même façon.

Le module MPG génère une retenue résultante $Z_{16}$, ainsi qu'un signal de propagation par groupe $G_{15\_0}$, et un signal de propagation par groupe $T_{15\_0}$.

Les signaux $G_{15\_0}$ et $T_{15\_0}$ correspondent respectivement aux signaux de génération et de propagation par groupe de l'ensemble des blocs A1,..., A4.

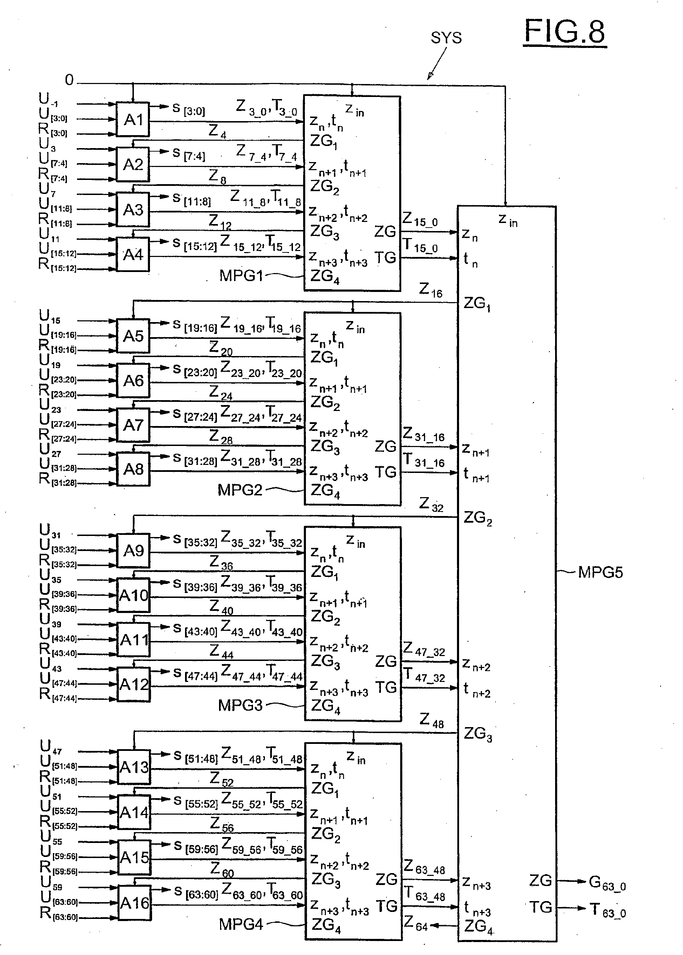

La figure 8 représente également un additionneur avec propagation de la retenue par groupe recevant en entrée 64 bits. Ce type d'additionneur bien connu de l'homme du métier peut être utilisé avec moyens MDET tels que décrits sur la figure 5 ainsi que deux niveaux de modules de propagation par groupe.

Le système SYS comprend un premier niveau constitué de quatre modules de propagation par groupe MPG1, MPG2, MPG3 et MPG4. Chaque module de propagation par groupe est connecté à quatre sous-blocs, respectivement A1, ..., $A_4$ et $A_5$, ..., $A_8$ et $A_9$, ...$A_{12}$, et $A_{13}$, ..., $A_{16}$, correspondant aux moyens MDET représentés sur la figure 5.

Le deuxième niveau de module de propagation par groupe comprend un module MPG5 qui reçoit en entrée les signaux de sortie délivrés par chaque module de propagation par groupe du premier niveau.

L'additionneur tel que décrit ci-avant peut être utilisé à la place d'un additionneur classique 64 bits, avec propagation de retenue par groupe dans toutes les configurations.

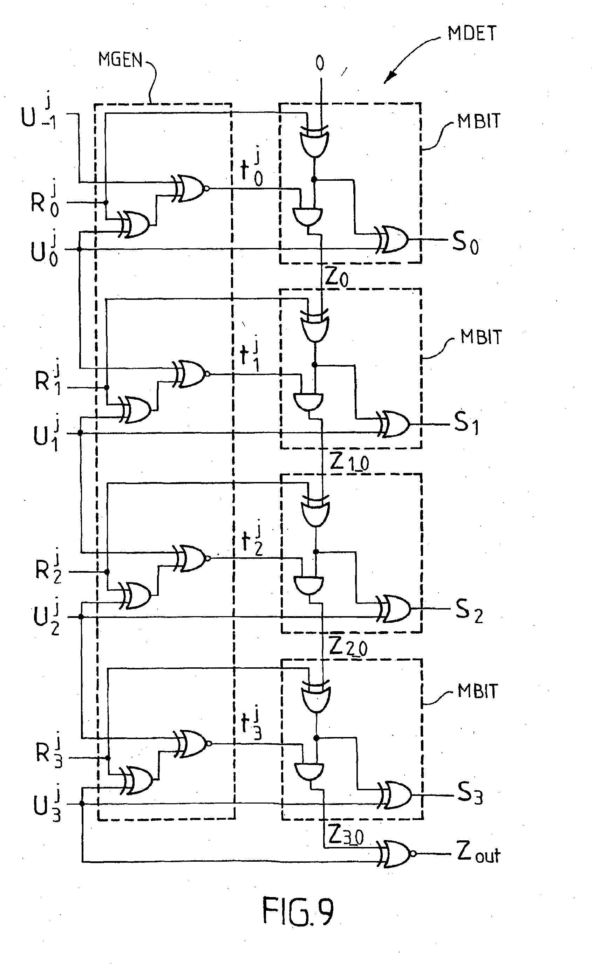

On va maintenant décrire un autre mode de réalisation des moyens de détermination MDET en référence à la figure 9.

Les moyens MDET comprennent des moyens de génération MGEN aptes à recevoir les signaux

$U^j_1$, $U^j_0$, $R^j_0$,..., $U^j_3$, $R^j_3$.

Ceux ci sont déterminés par un additionneur selon l'invention, par exemple selon l'un des modes de réalisation présentés sur les figures 3 ou 4.

Les signaux $U^j_1$, $U^j_0$, $R^j_0$, ..., $U^j_2$, $R^j_2$ sont délivrés en entrée des moyens de génération MGEN qui élaborent des signaux de propagation $t^j_0$, $t^j_1$ et $t^j_2$, qui sont calculés à partir de l'expression :

$$t^j_{n-1} = \left( U^j_{n-1} \oplus R^j_{n-1} \oplus U^j_{n-2} \oplus 1 \right) = \overline{U^j_{n-1} \oplus R^j_{n-1} \oplus U^j_{n-2}},$$

avec n variant de 1 à 3, et j étant un entier quelconque, compris ici entre 0 et 3.

Les moyens MDET comprennent de plus des moyens MBIT. Ces moyens MBIT réalisent les calculs au niveau de chaque bit et sont attaqués par les signaux de sortie des moyens de génération MGEN, ces derniers permettant d'accélérer le calcul des signaux de sortie S0, S1, S2 et S3 et de la retenue sortante $Z_{out}$ issue desdits moyens MBIT.

Les signaux de sortie des moyens MBIT sont obtenus par les relations ci-dessous :

$$
\begin{cases}
S_0 = U_0^{j+1} = U_0^j \oplus R_0^j \\
S_1 = U_1^{j+2} = U_1^j \oplus R_1^j \oplus z_0 \\
S_2 = U_2^{j+3} = U_2^j \oplus R_2^j \oplus z_{1\_0} \\
S_3 = U_3^{j+4} = U_3^j \oplus R_3^j \oplus z_{2\_0} \\
Z_{out} = U_3^j \oplus 1 \oplus z_{3\_0}
\end{cases}
$$

Avec :

$$
\begin{cases}
Z_0 = t_0^j \cdot R_0^j \\
Z_{1\_0} = t_1^j \cdot R_1^j \oplus t_1^j \cdot t_0^j \cdot R_0^j \\
Z_{2\_0} = t_2^j \cdot t_1^j \cdot R_1^j \oplus t_2^j \cdot t_1^j \cdot t_0^j \cdot R_0^j \\
Z_{3\_0} = t_3^j \cdot R_3^j \oplus t_3^j \cdot t_2^j \cdot R_2^j \oplus t_3^j \cdot t_2^j \cdot t_1^j \cdot R_1^j \oplus t_3^j \cdot t_2^j \cdot t_1^j \cdot t_0^j \cdot R_0^j
\end{cases}
$$

Les signaux $Z_0$, $Z_{1\_0}$, $Z_{2\_0}$ et $Z_{3\_0}$ sont quant à eux des signaux de retenue qui sont transmis entre moyens de calcul MBIT.

Ce mode de réalisation simple et itératif des moyens MDET est particulièrement compact et donc adapté pour une utilisation dans un circuit intégré.

Dans la figure 9 chaque moyen MBIT de rang (n+1) comprend une première porte logique « OU EXCLUSIF » apte à recevoir le signal de retenue $Z_{n-1\_0}$ généré par le moyen MBIT de rang (n) et le signal de correction $R_n^j$ . Le signal délivré attaque une porte logique « ET LOGIQUE » qui a pour deuxième entrée le signal $t_n^j$ issu des moyens MGEN, la sortie de cette porte « ET LOGIQUE » constituant le signal de retenue $Z_{n\_0}$ propagé vers le moyen MBIT de rang (n+2). Le moyen MBIT comprend également une deuxième porte logique de type « OU EXCLUSIF » recevant en première entrée le signal généré par la dite première porte « OU EXCLUSIF » et en deuxième entrée le signal $U_n^j$ , et délivrant en sortie le signal $S_n$. Un signal de retenue $Z_{out}$ est généré par une porte logique « OU EXCLUSIF » à sortie inverseuse recevant en entrée le signal de retenue $Z_{3\_0}$ délivré par le moyen MBIT de rang 4 et le signal $U_3^j$ .

L'homme du métier saura généraliser l'ensemble des modes de réalisation décrits ci-avant pour un nombre de bits quelconque des nombres d'entrée.

**Revendications**

1. Procédé d'addition de signaux d'entrée par un additionneur numérique, les signaux d'entrée comprenant un premier et un deuxième nombres binaires d'entrée, de N bits chacun, où l'additionneur détermine les bits de la somme ($S_n$) des signaux d'entrée (A, B), en effectuant j estimations de chaque bit de ladite somme, j étant un entier inférieur ou égal à N, et en corrigeant lesdites estimations ($U^k$) à l'aide d'un signal de correction ($R^k$) après chaque estimation, **caractérisé en ce que** chaque bit de correction de rang n ($R_n^j$), étant élaboré à l'aide de la dernière estimation du bit de rang n-1 du dernier bit de correction de rang et de la dernière estimation du bit de rang

une estimation de rang étant déterminée selon l'expression suivante : $U_n^k = U_n^{k-1} \oplus R_n^{k-1}$

un signal de correction de rang étant déterminé selon l'expression suivante : $R_n^k = \left( U_{n-1}^{k-1} \oplus U_{n-2}^{k-1} \right) \cdot R_{n-1}^{k-1}$

pour k variant de 1 à j et n variant de k à N,
et **en ce que** les bits estimés et les signaux de correction sont délivrés par des portes logiques de type OU EXCLUSIF et de type ET.

2. Procédé selon la revendication précédente, dans lequel les signaux d'entrée comprennent en outre une retenue d'entrée ($Z_{in}$)

3. Procédé selon l'une des revendications précédentes, comprenant en outre une étape d'initialisation (étape 1) dans laquelle on initialise la valeur des bits estimés de ladite somme et la valeur des signaux de correction.

4. Procédé selon l'une des revendications précédentes, dans lequel on élabore en outre une retenue de sortie ($Z_{out}$) à partir de l'ensemble des $N^{ièmes}$ signaux de correction.

5. Procédé selon l'une des revendications 3 à 4, dans lequel l'initialisation de chaque bit estimé de ladite somme est fonction des bits de même rang des premier et deuxième nombres d'entrée (A, B), et l'initialisation de la valeur du signal de correction de chaque bit estimé est fonction des bits de rang précédent des premier et deuxième nombres d'entrée.

6. Procédé selon la revendication précédente, dans lequel :

$$\begin{cases} U_n^0 = a_n \oplus \overline{b_n} \\ R_n^0 = a_{n-1} \cdot b_{n-1} \end{cases}$$

où :

$U_n^0$ est la valeur initiale du bit estimé de la somme des signaux d'entrée, de rang n, n variant de 0 à N-1,

$R_n^0$ est la valeur initiale du signal de correction du bit estimé de la somme des signaux d'entrée, de rang n, n variant de 1 à N,

$a_n$ et $b_n$ étant les bits de rang n, respectivement des premier et deuxième nombres d'entrée.

7. Procédé selon l'une des revendications 3 à 4, dans lequel l'initialisation de chaque bit estimé de ladite somme est fonction du complémentaire du bit de même rang du premier nombre d'entrée, et l'initialisation de la valeur des signaux de correction de chaque bit estimé est fonction du bit de rang précédent du premier nombre d'entrée, et du bit de même rang du deuxième nombre d'entrée.

8. Procédé selon la revendication précédente, dans lequel :

$$\begin{cases} U_n^0 = \overline{a_n} \\ R_n^0 = \overline{a_{n-1} \oplus b_n} \end{cases}$$

où :

$U_n^0$ est la valeur initiale du bit estimé de la somme des signaux d'entrée, de rang n, n variant de 0 à N-1,

$R_n^0$ est la valeur initiale du signal de correction du bit estimé de la somme des signaux d'entrée, de rang n, n variant de 1 à N,

$a_n$ et $b_n$ étant les bits de rang n, respectivement des premier et deuxième nombres d'entrée.

**9.** Procédé selon l'une des revendications 3 à 8, dans lequel j est égal à N, et dans lequel le bit de rang n de la somme $(S_n)$, correspond au bit de rang n estimé de la somme, estimé lors de la $(n+1)^{ième}$ étape de traitement $\left( U_n^{n+1} \right)$.

**10.** Procédé selon l'une des revendications 3 à 8, comprenant en outre à l'issue des j étapes de traitement, une étape de génération de N-1 signaux de propagation $\left( t_n^j \right)$, le $q^{ième}$ signal de propagation étant fonction du bit estimé de ladite somme de rang q, de son signal de correction, et du bit estimé de rang q-1 de ladite somme, et dans lequel chaque bit de ladite somme est calculé à partir des $q^{ièmes}$ signaux de propagation, tel que q est inférieur au rang du bit considéré.

**11.** Additionneur permettant d'additionner des signaux d'entrée comprenant un premier (A) et un deuxième (B) nombres binaires d'entrée, de N bits chacun, **caractérisé en ce que** ledit additionneur comprend des moyens de détermination (MDET) aptes à déterminer les bits de la somme des signaux d'entrée, comportant :

- des moyens d'estimation comprenant des blocs d'estimation (BESTi) connectés en série, chaque bloc d'estimation étant apte à effectuer une estimation d'un bit de ladite somme,

une estimation de rang étant déterminés selon l'expression suivante : $U_n^k = U_n^{k-1} \oplus R_n^{k-1}$ pour k variant de 1 à j et n variant de k à N, et j étant un entier inférieur ou égal à N,
- des moyens de correction (MCORi) aptes à élaborer un signal de correction d'un bit de ladite somme,
un signal de correction de rang étant déterminés selon l'expression suivante : $R_n^k = \left( U_{n-1}^{k-1} \oplus U_{n-2}^{k-1} \right) \cdot R_{n-1}^{k-1}$ pour k variant de 1 à j et n variant de k à N, de façon à corriger, après chaque estimation, chaque bit estimé de ladite somme, chaque signal de correction d'un bit estimé de rang n de la somme, étant élaboré à l'aide du dernier bit estimé et corrigé de rang n-1 de la somme, du signal de correction dudit dernier bit de rang n-1, et du dernier bit estimé et corrigé de rang n-2 de la somme,
et **en ce que** lesdits moyens d'estimation et de correction comprennent des portes logiques de type OU EXCLUSIF et de type ET.

**12.** Additionneur selon la revendication précédente, dans lequel les signaux d'entrée comprennent en outre une retenue d'entrée ($Z_{in}$).

**13.** Additionneur selon l'une des revendications 11 à 12, comprenant en outre des moyens d'initialisation (MINIT) couplés en amont des moyens de détermination, aptes à initialiser la valeur des bits estimés de ladite somme et la valeur des signaux de correction.

**14.** Additionneur selon la revendication précédente, dans lequel pour les $k^{ièmes}$ moyens de traitement, chaque bloc d'estimation d'un bit de la somme de rang n, comprend une porte logique de type « OU EXCLUSIF » apte à recevoir en entrée le bit estimé de la somme de rang n et le $n^{ième}$ signal de correction, respectivement estimé et élaboré par les $(k-1)^{ièmes}$ moyens de traitement, et dans lequel les moyens de correction d'un bit estimé de la somme de rang n+1, comprennent une autre porte logique de type « OU EXCLUSIF », apte à recevoir en entrée le bit estimé et corrigé de la somme de rang n-1, et le bit de rang (n-2) de la somme estimé et élaboré par les $(k-1)^{ièmes}$ moyens de traitement, et une porte logique de type « ET » couplée à la sortie de l'autre porte logique de type « OU EXCLUSIF », et apte à recevoir en entrée le signal de sortie de ladite autre porte logique et le $(n-1)^{ième}$ signal de correction estimé et élaboré par les $(k-1)^{ièmes}$ moyens de traitement.

**15.** Additionneur selon l'une des revendications 12 à 14, dans lequel les moyens de traitement comprennent en outre des moyens d'élaboration (MEL) aptes à élaborer une retenue de sortie ($Z_{out}$) à partir de l'ensemble des $N^{ièmes}$ signaux de correction.

**16.** Additionneur selon l'une des revendications 13, 14 et 15 dépendante de la 13, dans lequel les moyens d'initialisation (MINIT) sont aptes à initialiser la valeur de chaque bit à estimer de ladite somme en fonction des bits de même rang des premier et deuxième nombres d'entrée, et aptes à initialiser la valeur du signal de correction de chaque bit à estimer en fonction des bits de rang précédent des premier et deuxième nombres d'entrée.

**17.** Additionneur selon la revendication précédente, dans lequel les moyens d'initialisation (MINIT) comprennent N moyens d'initialisation élémentaires (MEi), chacun étant associé à un rang donné, comprenant une porte logique de type « OU EXCLUSIF », apte à recevoir les bits du rang considéré des premier et deuxième nombres d'entrée, et apte à délivrer pour le rang considéré, la valeur initiale du bit à estimer de la somme, et une portes logique de type « ET », apte à recevoir les bits du rang considéré, des premier et deuxième nombres d'entrée, et apte à délivrer la valeur initiale du signal de correction du bit estimé de la somme, du rang suivant le rang considéré.

**18.** Additionneur selon la revendication 16, dans lequel les moyens d'initialisation (MINIT) comprennent N moyens d'initialisation élémentaires (MEi), chacun étant associé à un rang donné, comprenant une portes logique inverseuse, apte à recevoir le bits du rang considéré du premier nombre d'entrée, et apte à délivrer pour le rang considéré, la valeur initiale du bit à estimer de la somme, et une porte logique de type « OU EXCLUSIF » à sortie inverseuse, apte à recevoir le bit du rang considéré du premier nombre d'entrée et le bit du rang suivant le rang considéré du deuxième nombre d'entrée, et apte à délivrer la valeur initiale du signal de correction du bit estimé de la somme, du rang suivant le rang considéré.

**19.** Additionneur selon l'une des revendications 13 à 18, dans lequel j est égal à N, et dans lequel le bit de la somme de rang n, correspond au bit de la somme de rang n estimé par les $(n+1)^{\text{ièmes}}$ moyens de traitement.

**20.** Additionneur selon l'une des revendications 13 à 18, comprenant en outre, des moyens de génération (MGEN) couplés aux $j^{\text{èmes}}$ moyens de traitement, aptes à générer N-1 signaux de propagation, le $q^{\text{ième}}$ signal de propagation étant fonction du bit estimé de ladite somme de rang q, de son signal de correction, et du bit estimé de rang q-1 de ladite somme, et des moyens de calcul (MCAL) aptes à calculer chaque bit de ladite somme à partir des $q^{\text{ièmes}}$ signaux de propagation, tel que q est inférieur au rang du bit considéré.

**21.** Additionneur selon la revendication 20, dans lequel les moyens de génération (MGEN) sont aptes à générer un $N^{\text{ième}}$ signal de propagation en fonction du bit estimé de rang N, de son signal de correction et du bit estimé de rang N-1, et dans lequel les moyens de calcul comprennent en outre un bloc de calcul apte à calculer un terme de génération de groupe à partir de l'ensemble des signaux de propagation générés et de l'ensemble des signaux de correction, et un terme de propagation de groupe à partir de l'ensemble des signaux de propagation.

**22.** Additionneur selon la revendication précédente, dans lequel N est pair, et dans lequel le bloc de calcul comprend :

- N portes logiques de type « ET », la $q^{\text{ième}}$ porte, q variant de 1 à N, étant apte à recevoir k signaux de propagation, k variant de 1 à q, et le $k^{\text{ième}}$ signal de correction,
- un réseau de portes logiques de type « OU EXCLUSIF », aptes à additionner l'ensemble des termes délivrés en sortie des portes logiques de type « ET », de façon à élaborer ledit terme de génération de groupe,
- une porte logique supplémentaire de type « ET », apte à multiplier l'ensemble des signaux de propagation de façon à élaborer ledit terme de propagation de groupe.

**23.** Additionneur selon l'une des revendications 13 à 18, **caractérisé en ce que** les moyens MDET comprennent des moyens de génération MGEN aptes à recevoir les signaux $U_{-1}^{j}$, $U_{0}^{j}$, $R_{0}^{j}$, ... $U_{n}^{j}$, $R_{n}^{j}$ pour initier des signaux de propagations $t_{0}^{j}$, $t_{1}^{j}$, ... $t_{n}^{j}$ et des moyens MBIT propres à réaliser les calculs au niveau de chaque bit à partir desdits signaux de propagation $t_{0}^{j}$, $t_{1}^{j}$, $t_{2}^{j}$,... , des signaux $U_{-1}^{j}$, $U_{0}^{j}$,... , des signaux de correction $R_{0}^{j}$, $R_{1}^{j}$, ... et des signaux intermédiaires $Z_0$, $Z_{1\_0}$, $Z_{2\_0}$,... de retenues transmis entre moyens de calculs MBIT au niveau de chaque bit, pour obtenir les signaux de sortie $S_0$, $S_1$, $S_2$ ...

**24.** Additionneur selon la revendication 23, **caractérisé en ce que** les signaux de propagation $t_{0}^{j}$, $t_{1}^{j}$ ... sont calculés à partir de l'expression :

$$t_{n-1}^{j} = \left( U_{n-1}^{j} \oplus R_{n-1}^{j} \oplus U_{n-2}^{j} \oplus 1 \right) = \overline{\left( U_{n-1}^{j} \oplus R_{n-1}^{j} \oplus U_{n-2}^{j} \right)}$$

avec n variant de 1 à 3, et j étant un entier quelconque, compris entre 0 et 3.

**25.** Additionneur selon la revendication 24, **caractérisé en ce que** les signaux de sortie $S_0$, $S_1$, $S_2$, $S_3$ sont obtenus

par les relations :

$$\begin{cases} S_0 = U_0^{j+1} = U_0^j \oplus R_0^j \\ S_1 = U_1^{j+2} = U_1^j \oplus R_1^j \oplus z_0 \\ S_2 = U_2^{j+3} = U_2^j \oplus R_2^j \oplus z_{1\_0} \\ S_3 = U_3^{j+4} = U_3^j \oplus R_3^j \oplus z_{2\_0} \\ Z_{out} = U_3^j \oplus 1 \oplus z_{3\_0} \end{cases}$$

Avec :

$$\begin{cases} Z_0 = t_0^j \cdot R_0^j \\ Z_{1\_0} = t_1^j \cdot R_1^j \oplus t_1^j \cdot t_0^j \cdot R_0^j \\ Z_{2\_0} = t_2^j \cdot t_1^j \cdot R_1^j \oplus t_2^j \cdot t_1^j \cdot t_0^j \cdot R_0^j \\ Z_{3\_0} = t_3^j \cdot R_3^j \oplus t_3^j \cdot t_2^j \cdot R_2^j \oplus t_3^j \cdot t_2^j \cdot t_1^j \cdot R_1^j \oplus t_3^j \cdot t_2^j \cdot t_1^j \cdot t_0^j \cdot R_0^j \end{cases}$$

26. Additionneur selon la revendication 23, **caractérisé en ce que** chaque moyen MBIT de rang (n+1) comprend une première porte logique « OU EXCLUSIF » apte à recevoir le signal de retenue $Z_{n-1\_0}$ généré par le moyen MBIT de rang (n) et le signal de correction $R_n^j$, en ce que le signal délivré attaque une porte logique « ET LOGIQUE » qui a pour deuxième entrée le signal $t_n^j$ issu des moyens MGEN, la sortie de cette porte « ET LOGIQUE » constituant le signal de retenue $Z_{n\_0}$ propagé vers le moyen MBIT de rang (n+2), **en ce que** le moyen MBIT comprend également une deuxième porte logique de type « OU EXCLUSIF » recevant en première entrée le signal généré par la dite première porte « OU EXCLUSIF » et en deuxième entrée le signal $U_n^j$, et délivrant en sortie le signal $S_n$ et **en ce que** un signal de retenue $Z_{out}$ est généré par une porte logique « OU EXCLUSIF » à sortie inverseuse recevant en entrée le signal de retenue $Z_{3\_0}$ délivré par le moyen MBIT de rang 4 et le signal $U_3^j$.

27. Système comprenant un réseau d'additionneurs selon l'une des revendication 11 à 20.

28. Système selon la revendication 27, dans lequel N est un multiple de 4, dans lequel le réseau d'additionneurs incorpore N/4 additionneurs (Ai) selon la combinaison de la revendication 12 et de l'une des revendications 21 à 22, couplés en parallèle, chaque additionneur étant apte à additionner N/4 bits successifs du premier et du deuxième nombre binaire d'entrée, ledit système comprenant en outre au moins un module de propagation par groupe (MPGi) apte à recevoir le terme de génération de groupe et le terme de propagation de groupe de chaque additionneur, et aptes à élaborer à partir du terme de génération de groupe et du terme de propagation de groupe d'un additionneur donné, une retenue pour l'additionneur additionnant les N/4 bits suivants.

**Patentansprüche**

1. Additionsverfahren für Eingangssignale durch einen digitalen Addierer, der Eingangssignale als eine erste und zweite Eingangsbinärzahl mit jeweils N Bits erfasst, bei denen der Addierer die Bits der Summe ($S_n$) der Eingangssignale (A, B) bestimmt, indem er $j$ Schätzungen für jedes Bit der erwähnten Summe durchführt, wobei $j$ eine Zahl unter oder gleich $N$ darstellt, und die besagten Schätzungen ($U^k$) mithilfe eines Korrektursignals ($R^k$) nach jeder Schätzung konigiert, und zwar dahingehend, dass jedes Korrekturbit der Stufe $n$ $(R_n^j)$ indem es mithilfe der letzten Schätzung des Bits der Stufe n-1 $(U_{n-1}^{j-1})$, des letzten Korrekturbits der Stufe n-1 $(R_{n-1}^{j-1})$ und der letzten Schätzung des Bits der Stufe n-2 $(U_{n-2}^{j-1})$ ermittelt wird, eine Schätzung des Rangs n $(U_n^k)$ ergibt, um gemäß der folgenden Formel:

$$U_n^k = U_n^{k-1} \oplus R_n^{k-1}$$

ein Korrektursignal der Stufe n $(R_n^k)$ zu bestimmen, das gemäß der Formel

$$R_n^k = (U_{n-1}^{k-1} \oplus U_{n-2}^{k-1}) \cdot R_{n-1}^{k-1}$$

zu bestimmen ist, wobei k zwischen 1 und j und n zwischen k bis N variiert, und dass die geschätzten Bits und die Korrektursignale von XOR- und UND-Gattern geliefert werden.

2. Verfahren gemäß dem vorhergehenden Anspruch, in dem die Eingangssignale außerdem einen Eingangsübertrag $(Z_{in})$ beinhalten.

3. Verfahren gemäß einem der vorhergehenden Ansprüche, das außerdem eine Initialisierungsstufe (Stufe 1) umfasst, in der man den Wert der geschätzten Bits der erwähnten Summe und den Wert der Korrektursignale initialisiert.

4. Verfahren gemäß einem der vorhergehenden Ansprüche, in dem man außerdem einen Ausgangsübertrag $(Z_{out})$ auf der Grundlage der N[ten] Korrektursignale ermittelt.

5. Verfahren gemäß einem der Ansprüche 3 bis 4, in dem die Initialisierung jedes geschätzten Bits der erwähnten Summe eine Funktion der Bits desselben Rangs der ersten und zweiten Eingangszahl (A, B) und die Initialisierung des Werts des Korrektursignals jedes geschätzten Bits eine Funktion der Bits der vorhergehenden Stufe der ersten und zweiten Eingangszahl darstellt.

6. Verfahren gemäß dem vorhergehenden Anspruch, in dem:

$$\begin{cases} U_n^0 = a_n \oplus b_n \\ R_n^0 = a_{n-1} b_{n-1} \end{cases}$$

wobei:

$U_n^0$ den Anfangswert der geschätzten Summe der Eingangssignale der Stufe n darstellt, mit n variierend von 0 bis N-1;

$R_n^0$ den Anfangswert des Korrektursignals des geschätzten Bits der Summe der Eingangssignale der Stufe n, mit n variierend von 1 bis N,

$a_n$ und $b_n$ Bits der Stufe n beziehungsweise die ersten und zweiten Eingangszahlen darstellen.

7. Verfahren gemäß einer der Ansprüche 3 bis 4, in dem die Initialisierung jedes geschätzten Bits der erwähnten Summe eine Funktion des Komplementärbits derselben Stufe der ersten Eingangszahl darstellt, und die Initialisierung des Werts der Korrektursignale jedes geschätzten Bits eine Funktion des Bits der vorhergehenden Stufe der ersten Eingangszahl und des Bits derselben Stufe der zweiten Eingangszahl darstellt.

8. Verfahren gemäß dem vorhergehenden Anspruch, in dem:

$$\begin{cases} U_n^0 = \overline{a_n} \\ R_n^0 = \overline{a_{n-1} \oplus b_n} \end{cases}$$

wobei:

$U_n^0$ den Anfangswert des geschätzten Bits der Summe der Eingangssignale der Stufe n darstellt, mit n variierend von 0 bis N-1,

$R_n^0$ den Anfangswert des Korrektursignals des geschätzten Bits der Summe der Eingangssignale der Stufe n darstellt, mit n variierend von 1 bis N,

$a_n$ und $b_n$ Bits der Stufe n beziehungsweise der ersten und zweiten Eingangszahlen darstellen.

9. Verfahren gemäß einem der Ansprüche 3 bis 8, in dem j gleich N ist, und in dem das Bit der Stufe n der Summe $(S_n)$ dem Bit der geschätzten Stufe der Summe entspricht, die bei dem $(n+1)^{ten}$ Bearbeitungsschritt $(U_n^{n+1})$ geschätzt wird.

10. Verfahren gemäß einem der Ansprüche 3 bis 8, das außerdem am Ende von j Bearbeitungsschritten einen Schritt der Erzeugung von N-1 Übertragungssignalen $(t_n, {}^j)$ beinhaltet, wobei das $q^{te}$ Übertragungssignal eine Funktion des geschätzten Bits der erwähnten Summe der Stufe q, seines Korrektursignals und des geschätzten Bits der Stufe q-1 der erwähnten Summe darstellt, und in dem jedes Bit der erwähnten Summe aufgrund von $q^{ten}$ Übertragungssignalen berechnet wird, so dass q unterhalb der Stufe des betroffenen Bits liegt.

11. Ein Addierer, der ermöglicht, Eingangssignale einer ersten (A) und einer zweiten (B) Eingangs-Binärzahl mit jeweils N Bits zu addieren, und zwar dahingehend, dass der Addierer Bestimmungsmittel (MDET) enthält, die geeignet sind, die Bits der Summe der Eingangssignale zu bestimmen, die sich folgendermaßen zusammensetzen:

- Schätzmittel, die seriell verschaltete Schätzblocks (BESTi) enthalten, bei denen jeder Schätzblock in der Lage ist, die Schätzung eines Bits der erwähnten Summe durchzuführen;

- eine Schätzung der Stufe n n $(U_n^k)$, die gemäß der folgenden Formel zu bestimmen ist: $U_n^k = U_n^{k-1} \oplus R_n^{k-1}$, mit k variierend von 1 bis j und n von k bis N, während j eine ganze Zahl unter oder gleich N ist;

- Korrekturmittel (MCORi), die imstande sind, ein Korrektursignal eines Bits der erwähnten Summe zu ermitteln;

- ein Korrektursignal der Stufe n n $(R_n^k)$, das gemäß folgender Formel zu bestimmen ist: $R_n^k = (U_{n-1}^{k-1} \oplus U_{n-1}^{k-2}) \cdot R_{n-1}^{k-1})$, mit k variierend von 1 bis j und n variierend von k bis N, und imstande, nach jeder Schätzung jedes geschätzte Bit der erwähnten Summe zu korrigieren, wobei jedes Korrektursignal eines geschätzten Bits der Stufe n derselben Summe mithilfe des letzten geschätzten und korrigierten Bits der Stufe n-1, des Korrektursignals des erwähnten Bits der Stufe n-1 und des letzten geschätzten und korrigierten Bits der Stufe n-1 der Summe zu ermitteln ist; und dahingehend, dass die erwähnten Schätz- und Korrekturmittel XOR- und UND-Gatter beinhalten.

12. Addierer gemäß dem vorhergehenden Anspruch, bei dem die Eingangssignale außerdem einen Eingangsübertrag $(Z_{in})$ beinhalten.

13. Addierer gemäß einem der Ansprüche 11 bis 12, der außerdem vor den Bestimmungsmitteln eingeschaltete Initialisierungsmittel (MINIT) besitzt, die imstande sind, den Wert der geschätzten Bits der erwähnten Summe und den Wert der Korrektursignale zu initialisieren.

14. Addierer gemäß dem vorhergehenden Anspruch, bei dem bzgl. der $k^{ten}$ Bearbeitungsmittel jeder Schätzblock eines Bits der Summe der Stufe n ein XOR-Gatter enthält, das imstande ist, im Eingang ein geschätztes Bit der Summe der Stufe n und das $n^{te}$ Korrektursignal zu empfangen, die jeweils von den $(k-1)^{ten}$ Bearbeitungsmitteln geschätzt und ermittelt werden, und bei dem die Korrekturmittel eines geschätzten Bits der Summe der Stufe n+1 ein anderes XOR-Gatter enthält, das imstande ist, im Eingang das geschätzte und korrigierte Bit der Summe der Stufe n-1 und das mithilfe der $(k-1)^{ten}$ Bearbeitungsmittel geschätzte und ermittelte Bit der Stufe (n-2) zu empfangen; und ein anderes UND-Gatter, das mit dem Ausgang des anderen XOR-Gatters verschaltet und imstande ist, im Eingang das Ausgangssignal des erwähnten anderen logischen Gatters und das (n-1)$^{te}$ Korrektursignal zu empfangen, welches mithilfe der (k-1)$^{ten}$ Bearbeitungsmittel zu schätzen und zu ermitteln ist.

**15.** Addierer gemäß einem der Ansprüche 12 bis 14, bei dem die Bearbeitungsmittel außerdem Ermittlungsmittel (MEL) enthalten, die imstande sind, einen Ausgangsübertrag ($Z_{out}$) aufgrund aller N$^{ten}$ Korrektursignale zu ermitteln.

**16.** Addierer gemäß einem der Ansprüche 13, 14, und 15, abhängig von 13, bei dem die Initialisierungsmittel (MINIT) imstande sind, den Wert jedes zu schätzenden Bits der erwähnten Summe in Einklang mit den Bits derselben Stufe der ersten und zweiten Eingangszahlen zu initialisieren, und imstande, den Wert des Korrektursignals jedes zu schätzenden Bits in Einklang mit den Bits der vorhergehenden Stufe der ersten und zweiten Eingangszahlen zu initialisieren.

**17.** Addierer gemäß dem vorhergehenden Anspruch, bei dem die Initialisierungsmittel (MINIT) N elementare Initialisierungsmittel (MEi) enthalten, die jeweils mit einer gegeben Stufe verbunden sind, und der ein XOR-Gatter enthält, welches sowohl imstande ist, die Bits der betroffenen Stufe der ersten und zweiten Eingangszahlen zu empfangen, als auch für die betroffene Stufe den initialen Wert des zu schätzenden Bits der Summe zu liefern, und ein UND-Gatter, welches sowohl imstande ist, die Bits der betroffenen Stufe der ersten und zweiten Eingangszahlen zu empfangen, als auch den initialen Wert des Korrektursignals des geschätzten Bits der Summe der Stufe zu liefern, die auf die betroffene folgt.

**18.** Addierer gemäß dem Anspruch 16, in dem die Initialisierungsmittel (MINIT) N elementare Initialisierungsmittel (MEi) beinhalten, wobei jedes mit einer gegebenen Stufe verknüpft ist, ein umkehrbares logisches Gatter enthält und imstande ist, die Bits der betroffenen Stufe der ersten Eingangszahl zu empfangen, sowie imstande, für die betroffene Stufe den initialen Wert des Bits der zu schätzenden Summe zu liefern, weiterhin ein XOR-Gatter am umkehrbaren Ausgang, das imstande ist, das Bit der betroffenen Stufe der ersten Eingangszahl und das Bit der Stufe zu empfangen, welches auf die betroffene Stufe der zweiten Eingangszahl folgt, sowie imstande, den initialen Wert des Korrektursignals des geschätzten Bits der Summe der Stufe, die auf die betroffene folgt.

**19.** Addierer gemäß einem der Ansprüche 13 bis 18, in dem j gleich N ist und in dem das Bit der Summe der Stufe n dem Bit der Summe der Stufe n entspricht, das durch (n+1)$^{te}$ Bearbeitungsmittel geschätzt wird.

**20.** Addierer gemäß einem der Ansprüche 13 bis 18, der außerdem mit den j$^{ten}$ Bearbeitungsmitteln verschaltete Generierungsmittel (MGEN) enthält, die imstande sind, N-1 Übertragungssignale zu erzeugen, bei denen das q$^{te}$ Übertragungssignal eine Funktion des geschätzten Bits der erwähnten Summe der Stufe q, seines Korrektursignals und des geschätzten Bits der Stufe q-1 dieser Summe darstellt, sowie Berechnungsmittel (MCAL), die imstande sind, jedes Bit dieser Summe ausgehend von q$^{ten}$ Übertragungssignalen zu berechnen, so dass q unterhalb der Stufe des betroffenen Bits liegt.

**21.** Addierer gemäß dem Anspruch 20, in dem die Generierungsmittel (MGEN) imstande sind, ein n$^{tes}$ Übertragungssignal in Einklang mit dem geschätzten Bit der Stufe N, seinem Korrektursignal und dem geschätzten Bit der Stufe N-1 zu erzeugen, und in dem die Rechenmittel außerdem einen Rechenblock enthalten, der imstande ist, einen Gruppengenerierungsterm ausgehend von allen erzeugten Übertragungssignalen und allen Korrektursignalen, sowie einen Gruppenübertragungsterm ausgehend von allen Übertragungssignalen zu berechnen.

**22.** Addierer gemäß dem vorhergehenden Anspruch, in dem N paarig ist und in dem der Rechenblock Folgendes enthält:

- N logische UND-Gatter, worunter das q$^{te}$ Gatter, mit q variierend von 1 bis N, imstande ist, k Übertragungssignale, mit k variierend von 1 bis q, und das k$^{te}$ Korrektursignal zu empfangen;
- ein Netz logischer XOR-Gatter, das imstande ist, alle von den Ausgängen der UND-Gatter gelieferten Terme zu addieren, um den erwähnten Generierungsgruppenterm zu ermitteln;
- ein ergänzendes logisches UND-Gatter, das in der Lage ist, alle Übertragungssignale zu multiplizieren, um den erwähnten Übertragungsgruppenterm zu ermitteln.

**23.** Addierer gemäß einem der Ansprüche 13 bis 18, der sich dadurch auszeichnet, dass die MDET-Mittel Generierungsmittel MGEN enthalten, die in der Lage sind, die Signale $U_{-1}^{j}$, $U_{0}^{j}$, $R_{0}^{j}$, .... $U_{n}^{j}$, $R_{n}^{j}$ zu empfangen, um die Übertragungssignale $t_0^j$, $t_1^j$, ... $t_n^j$ und die MBIT-Mittel zu initiieren, die sich wiederum dazu eignen, die Berechnungen auf Ebene jedes Bits im Ausgang von den aufgeführten Übertragungssignalen $t_0^j$, $t_1^j$, $t_2^j$, ..., der Signale $U_{-1}^j$, $U_0^j$, ..., der Korrektursignale $R_0^j$, $R_1^j$, ... und der Zwischensignalüberträge $Z_0$, $Z_{1-0}$, $Z_{2-0}$, ... durchzuführen, die zwischen den Berechnungsmitteln MBIT auf Ebene jedes Bits übertragen werden, um die Ausgangssignale $S_0$, $S_1$, $S_2$ ... zu erhalten.

24. Addierer gemäß dem Anspruch 23, der sich dadurch auszeichnet, dass die Übertragungssignale $t_0^j$, $t_1^j$ ... im Ausgang von dem Ausdruck:

$$t_{n-1}^j = \left( U_{n-1}^j \oplus R_{n-1}^j \oplus U_{n-2}^j \oplus 1 \right) = \overline{\left( U_{n-1}^j \oplus R_{n-1}^j \oplus U_{n-2}^j \right)}$$

berechnet werden, mit n variierend von 1 bis 3 und j als eine beliebige ganze Zahl zwischen 0 und 3.

25. Addierer gemäß dem Anspruch 24, der sich dadurch auszeichnet, dass sich die Ausgangssignale S0, S1, S2, S3 durch die folgenden Relationen ergeben:

$$\begin{cases} S_0 = U_0^{j+1} = U_0^j \oplus R_0^j \\ S_1 = U_1^{j+2} = U_1^j \oplus R_1^j \oplus z_0 \\ S_2 = U_2^{j+3} = U_2^j \oplus R_2^j \oplus z_{1\_0} \\ S_3 = U_3^{j+4} = U_3^j \oplus R_3^j \oplus z_{2\_0} \\ Z_{out} = U_3^j \oplus 1 \oplus z_{3\_0} \end{cases}$$

Mit:

$$\begin{cases} Z_0 = t_0^j \cdot R_0^j \\ Z_{1\_0} = t_1^j \cdot R_1^j \oplus t_1^j \cdot t_0^j \cdot R_0^j \\ Z_{2\_0} = t_2^j \cdot t_1^j \cdot R_1^j \oplus t_2^j \cdot t_1^j \cdot t_0^j \cdot R_0^j \\ Z_{3\_0} = t_3^j \cdot R_3^j \oplus t_3^j \cdot t_2^j \cdot R_2^j \oplus t_3^j \cdot t_2^j \cdot t_1^j \cdot R_1^j \oplus t_3^j \cdot t_2^j \cdot t_1^j \cdot t_0^j \cdot R_0^j \end{cases}$$

26. Addierer gemäß dem Anspruch 23, der sich dadurch auszeichnet, dass jedes Mittel MBIT der Stufe (n+1) ein erstes XOR-Gatter enthält, das imstande ist, den vom MBIT-Mittel der Stufe (n) generierten Signalübertrag $Z_{n-1\_0}$ und das Korrektursignal $R_n^j$ zu empfangen, indem das gelieferte Signal ein UND-Gatter bedient, das im zweiten Eingang ein Signal $t_n^j$ ausgehend von den MGEN-Mitteln empfängt, wobei der Ausgang dieses UND-Gatters den Signalübertrag $Z_{n\_0}$ darstellt, der zum MBIT-Mittel der Stufe (n+2) geleitet wird, dahingehend, dass das MBIT-Mittel außerdem ein zweites XOR-Gatter enthält, das im ersten Eingang das vom erwähnten ersten XOR-Gatter generierte Signal und im zweiten Eingang das Signal $U_n^j$ empfängt und im Ausgang das Signal $S_n$ liefert, sowie dahingehend, dass ein Übertragssignal $Z_{out}$ vom einem XOR-Gatter am umgekehrten Ausgang generiert wird, das im Eingang das Übertragssignal $Z_{3\_0}$ empfängt, das vom MBIT-Mittel der Stufe 4 und dem Signal $U_3^j$ geliefert wird.

27. System, das sich aus einem Netz von Addierern gemäß einem der Ansprüche 11 bis 20 zusammensetzt.

**28.** System gemäß dem Anspruch 27, in dem N ein Vielfaches von 4 ist und das Netz der Addierer gemäß der Kombination aus Anspruch 12 und einem der Ansprüche 21-22 N/4 Addierer (Ai) in Parallelschaltung verkörpert, wobei jeder Addierer imstande ist, N/4 aufeinanderfolgende Bits der ersten und zweiten Eingangsbinärzahlen zu addieren, und dieses System außerdem mindestens ein Übertragungsmodul pro Gruppe (MPGi) enthält, das imstande ist, den Gruppengenerierungsterm und den Gruppenübertragungsterm jedes Addierers zu empfangen, sowie imstande, ausgehend vom Gruppengenerierungsterm und Gruppenübertragungsterm eines gegebenen Addierers einen Übertrag für den Addierer zu ermitteln, der die folgenden N/4-Bits addiert.

## Claims

**1.** Method for adding input signals by a digital adder, the input signals comprising a first and a second binary input number, each of N bits, wherein the adder determines the bits of the sum ($S_n$) of the input signals (A, B) by making j estimations ($U^k$) of each bit of said sum, j being an integer less than or equal to N, and by correcting said estimations ($U^k$) with the aid of a correction signal ($R^k$) after each estimation,

**characterised in that** each correction bit of rank $\text{n}$ ($R_n^j$) is created with the aid of the last estimation of the bit of rank $\text{n}-1$ ($U_{n-1}^{j-1}$), of the last correction bit of rank n-1 ($R_{n-1}^{j-1}$), and the last estimation of the bit of rank $\text{n}-2$ ($U_{n-2}^{j-1}$), an estimation of rank $\text{n}$ ($U_n^k$) being determined in accordance with the following expression:

$$U_n^k = U_n^{k-1} \oplus R_n^{k-1},$$

a correction signal of rank n ($R_n^k$) being determined in accordance with the following expression:

$$R_n^k = \left( U_{n-1}^{k-1} \oplus U_{n-2}^{k-1} \right) \cdot R_{n-1}^{k-1}$$

for k ranging from 1 to j and n ranging from k to N,
and **in that** the estimated bits and the correction signals are output by logic gates of "EXCLUSIVE OR" type and of "AND" type.

**2.** Method according to the preceding claim, in which the input signals include, in addition, an input carry ($Z_{in}$).

**3.** Method according to one of the preceding claims, further including an initialisation step (step 1) in which the value of the estimated bits of said sum and the value of the correction signals are initialised.

**4.** Method according to one of the preceding claims, in which an output carry ($Z_{out}$) is created from the totality of the Nth correction signals.

**5.** Method according to one of claims 3 to 4, in which the initialisation of each estimated bit of said sum is a function of the bits of identical rank of the first and second input numbers (A, B), and the initialisation of the value of the correction signal of each estimated bit is a function of the bits of preceding rank of the first and second input numbers.

**6.** Method according to the preceding claim, in which:

$$\begin{cases} U_n^0 = a_n \oplus b_n \\ R_n^0 = a_{n-1} \cdot b_{n-1} \end{cases}$$

where:

$U_n^0$ is the initial value of the estimated bit of the sum of the input signals of rank n, n ranging from 0 to N-1,

$R_n^0$ is the initial value of the correction signal of the estimated bit of the sum of the input signals of rank n, n ranging from 1 to N-1,

$a_n$ and $b_n$ being the bits of rank n of the first and second input numbers, respectively.

7. Method according to one of claims 3 to 4, in which the initialisation of each estimated bit of said sum is a function of the complement of the bit of identical rank of the first input number, and the initialisation of the value of the correction signals of each estimated bit is a function of the bit of preceding rank of the first input number and of the bit of identical rank of the second input number.

8. Method according to the preceding claim, in which:

$$\begin{cases} U_n^0 = \overline{a_n} \\ R_n^0 = \overline{a_{n-1} \oplus b_n} \end{cases}$$

where:

$U_n^0$ is the initial value of the estimated bit of the sum of the input signals of rank n, n ranging from 0 to N-1,

$R_n^0$ is the initial value of the correction signal of the estimated bit of the sum of the input signals of rank n, n ranging from 1 to N,

$a_n$ and $b_n$ being the bits of rank n of the first and second input numbers, respectively.

9. Method according to one of the claims 3 to 8, in which j is equal to N, and in which the bit of rank n of the sum ($S_n$) corresponds to the estimated bit of rank n of the sum, estimated at the time of the (n+1)th processing step ($U_n^{n+1}$).

10. Method according to one of Claims 3 to 8, further including at the conclusion of the j processing steps, a step of generation of N-1 propagation signals ($t_n^j$), the qth propagation signal being a function of the estimated bit of said sum of rank q, of its correction signal, and of the estimated bit of rank q-1 of said sum, and in which each bit of said sum is calculated from the qth propagation signals, such that q is less than the rank of the bit being considered.

11. Adder for adding input signals comprising a first (A) and a second (B) binary input number, each of N bits, to be added, **characterised in that** said adder includes determination means (MDET) capable of determining the bits of the sum of the input signals, comprising:

- estimation means comprising estimation units (BESTi) connected in series, each estimation unit being capable of making an estimation of a bit of said sum,

an estimation of rank n ($U_n^k$) being determined in accordance with the following expression:

$$U_n^k = U_n^{k-1} \oplus R_n^{k-1}$$ for k ranging from 1 to j, and n ranging from k to N, and j being an integer less than or equal to N,

- correction means (MCORi) capable of creating a signal for correction of a bit of said sum,

a correction signal of rank n ($R_n^k$) being determined in accordance with the following expression:

$$R_n^k = \left( U_{n-1}^{k-1} \oplus U_{n-2}^{k-1} \right) \cdot R_{n-1}^{k-1}$$

for k ranging from 1 to j, and n ranging from k to N, so as to correct each estimated bit of said sum after each estimation, each signal for correction of an estimated bit of rank n of the sum being created with the aid of the last estimated and corrected bit of rank n-1 of the sum, the signal for correction of the last bit of rank n-1, and the last estimated and corrected bit of rank n-2 of the sum,

and **in that** said estimation means and correction means include logic gates of "EXCLUSIVE OR" type and of "AND" type.

12. Adder according to the preceding claim, in which the input signals include, in addition, an input carry ($Z_{in}$).

13. Adder according to one of the claims 11 to 12, including, in addition, initialisation means (MINIT) coupled upstream of the determination means and capable of initialising the value of the estimated bits of said sum and the value of the correction signals.

14. Adder according to the preceding claim, in which for the kth processing means each unit for estimation of a bit of the sum of rank n includes a logic gate of "EXCLUSIVE OR" type, capable of receiving at its input the estimated bit of the sum of rank n and the nth correction signal, respectively estimated and created by the (k-1)th processing means, and in which the means for correction of an estimated bit of the sum of rank n+1 include another logic gate of "EXCLUSIVE OR" type, capable of receiving at its input the estimated and corrected bit of the sum of rank n-1 and the bit of rank n-2 of the sum, estimated and created by the (k-1)th processing means, and a logic gate of "AND" type, coupled to the output of the other logic gate of "EXCLUSIVE OR" type and capable of receiving at its input the output signal of said other logic gate and the (n-1)th correction signal estimated and created by the (k-1)th processing means.

15. Adder according to one of claims 12 to 14, in which the processing means include, in addition, creation means (MEL) capable of creating an output carry ($Z_{out}$) from the totality of the Nth correction signals.

16. Adder according to one of claims 13, 14 and 15 depending on 13, in which the initialisation means (MINIT) are capable of initialising the value of each bit to be estimated of said sum as a function of the bits of identical rank of the first and second input numbers, and are capable of initialising the value of the signal for correction of each bit to be estimated as a function of the bits of preceding rank of the first and second input numbers.

17. Adder according to the preceding claim, in which the initialisation means (MINIT) comprise N elementary initialisation means (MEi), each one being associated with a given rank, including a logic gate of "EXCLUSIVE OR" type, capable of receiving the bits of the rank being considered of the first and second input numbers, and capable of outputting, for the rank being considered, the initial value of the bit to be estimated of the sum, and a logic gate of "AND" type, capable of receiving the bits of the rank being considered of the first and second input numbers, and capable of outputting the initial value of the signal for correction of the estimated bit of the sum, of the rank following the rank being considered.

18. Adder according to claim 16, in which the initialisation means (MINIT) comprise N elementary initialisation means (MEi), each one being associated with a given rank, including an inverting logic gate capable of receiving the bits of the rank being considered of the first input number, and capable of outputting, for the rank being considered, the initial value of the bit to be estimated of the sum, and a logic gate of "EXCLUSIVE OR" type with inverting output, capable of receiving the bit of the rank being considered of the first input number and the bit of rank following the rank being considered of the second input number, and capable of outputting the initial value of the correction signal of the estimated bit of the sum, of the rank following the rank being considered.

19. Adder according to one of claims 13 to 18, in which j is equal to N, and in which the bit of the sum of rank n corresponds to the bit of the sum of rank n estimated by the (n+1)th processing means.

20. Adder according to one of claims 13 to 18, including, in addition, generation means (MGEN) coupled to the jth processing means and capable of generating N-1 propagation signals, the qth propagation signal being a function of the estimated bit of said sum of rank q, of its correction signal, and of the estimated bit of rank q-1 of said sum, and calculation means (MCAL) capable of calculating each bit of said sum from the qth propagation signals, such that q is less than the rank of the bit being considered.

21. Adder according to claim 20, in which the generation means (MGEN) are capable of generating an Nth propagation signal as a function of the estimated bit of rank N, of its correction signal and of the estimated bit of rank N-1, and in which the calculation means include, in addition, a calculation unit capable of calculating a group-generation term from the totality of the generated propagation signals and from the totality of the correction signals, and a group-propagation term from the set of the propagation signals.

**22.** Adder according to the preceding claim, in which N is even, and in which the calculation unit comprises:

- N logic gates of "AND" type, the qth gate, q ranging from 1 to N, being capable of receiving k propagation signals, k ranging from 1 to q, and the kth correction signal,
- a network of logic gates of "EXCLUSIVE OR" type, capable of adding the totality of the terms output at the output of the logic gates of "AND" type so as to create said group-generation term,
- an additional logic gate of "AND" type, capable of multiplying the totality of the propagation signals so as to create said group-propagation term.

**23.** Adder according to one of claims 13 to 18, **characterised in that** the means MDET include generation means MGEN capable of receiving the signals $U_{-1}^{j}$, $U_{0}^{j}$, $R_{0}^{j}$, ... $U_{n}^{j}$, $R_{n}^{j}$ in order to initiate propagation signals $t_{0}^{j}$, $t_{1}^{j}$, ... $t_{n}^{j}$ and means MBIT appropriate to carry out the calculations at the level of each bit from said propagation signals $t_{0}^{j}$, $t_{1}^{j}$, $t_{2}^{j}$,... , from the signals $U_{-1}^{j}$, $U_{0}^{j}$,... , from the correction signals $R_{0}^{j}$, $R_{1}^{j}$, ... and from the intermediate carry signals $Z_0$, $Z_{1-0}$, $Z_{2-0}$,... transmitted between calculation means MBIT at the level of each bit in order to obtain the output signals $S_0$, $S_1$, $S_2$ ....

**24.** Adder according to Claim 23, **characterised in that** the propagation signals $t_{0}^{j}$, $t_{1}^{j}$ ... are calculated from the expression:

$$t_{n-1}^{j} = \left( U_{n-1}^{j} \oplus R_{n-1}^{j} \oplus U_{n-2}^{j} \oplus 1 \right) = \overline{\left( U_{n-1}^{j} \oplus R_{n-1}^{j} \oplus U_{n-2}^{j} \right)},$$

with n ranging from 1 to 3, and j being any integer between 0 and 3.

**25.** Adder according to Claim 24, **characterised in that** the output signals $S_0$, $S_1$, $S_2$, $S_3$ are obtained by the relationships:

$$\begin{cases} S_0 = U_0^{j+1} = U_0^j \oplus R_0^j \\ S_1 = U_1^{j+2} = U_1^j \oplus R_1^j \oplus z_0 \\ S_2 = U_2^{j+3} = U_2^j \oplus R_2^j \oplus z_{1\_0} \\ S_3 = U_3^{j+4} = U_3^j \oplus R_3^j \oplus z_{2\_0} \\ Z_{out} = U_3^j \oplus 1 \oplus z_{3\_0} \end{cases}$$

with:

$$\begin{cases} Z_0 = t_0^j \cdot R_0^j \\ Z_{1\_0} = t_1^j \cdot R_1^j \oplus t_1^j \cdot t_0^j \cdot R_0^j \\ Z_{2\_0} = t_2^j \cdot t_1^j \cdot R_1^j \oplus t_2^j \cdot t_1^j \cdot t_0^j \cdot R_0^j \\ Z_{3\_0} = t_3^j \cdot R_3^j \oplus t_3^j \cdot t_2^j \cdot R_2^j \oplus t_3^j \cdot t_2^j \cdot t_1^j \cdot R_1^j \oplus t_3^j \cdot t_2^j \cdot t_1^j \cdot t_0^j \cdot R_0^j \end{cases}$$

26. Adder according to claim 23, **characterised in that** each means MBIT of rank n+1 includes a first "EXCLUSIVE OR" logic gate capable of receiving the carry signal $Z_{n-1\_0}$ generated by the means MBIT of rank n and the correction signal $R_n^j$, **in that** the signal that is output is applied to an "AND" logic gate which has as second input the signal $t_n^j$ resulting from the means MGEN, the output of this "AND" logic gate constituting the carry signal $Z_{n\_0}$ propagated towards the means MBIT of rank n+2, **in that** the means MBIT also includes a second logic gate of "EXCLUSIVE OR" type receiving at its first input the signal generated by said first "EXCLUSIVE OR" gate, and at its second input the signal $U_n^j$, and outputting at its output the signal $S_{n'}$ and **in that** a carry signal $Z_{out}$ is generated by an "EXCLUSIVE OR" logic gate with inverting output receiving at its input the carry signal $Z_{3\_0}$ which has been output by the means MBIT of rank 4 and the signal $U_3^j$.

27. System comprising a network of adders according to one of claims 11 to 20.

28. System according to claim 27, in which N is a multiple of 4, in which the network of adders incorporates N/4 adders (Ai) according to the combination of claim 12 and one of claims 21 to 22, coupled in parallel, each adder being capable of adding N/4 successive bits of the first and of the second binary input number, said system including, in addition, at least one group-propagation module (MPGi) capable of receiving the group-generation term and the group-propagation term of each adder, and capable of creating, from the group-generation term and from the group-propagation term of a given adder, a carry for the adder adding the following N/4 bits.

# FIG.1

$a_0,...a_{n-1},b_0,...,b_{n-1},Z_{in}$

┌─────────────────────────┐
│   étape préliminaire     │── étape 1
└─────────────────────────┘

$R^0_{k-1}, U^0_{k-1}$

┌─────────────────────────────────┐
étape 2 ─│  correction et nouvelle         │
         │  estimation de $R^i_{k+1}, U^i_{k+1}$ │
└─────────────────────────────────┘
                                            si i≠n-1

étape 3 ─│   $i \leftarrow i+1$   │

$S_i$

si i=n-1

$Z_{out}$

FIG.2

FIG.3

EP 2 013 705 B1

FIG.4

FIG.5

FIG. 6

32

FIG.7

# FIG.8

FIG.9

**EP 2 013 705 B1**

**RÉFÉRENCES CITÉES DANS LA DESCRIPTION**

**Documents brevets cités dans la description**

•  US 3566098 A

**Littérature non-brevet citée dans la description**

•  **J. CHINAL.** Circuits logiques de traitement numérique de l'information. 1979, 105-112